(19) Europäisches Patentamt
European Patent Office
Office européen des brevets

(11) EP 2 397 532 A1

(12) **EUROPEAN PATENT APPLICATION**
published in accordance with Art. 153(4) EPC

(43) Date of publication:
**21.12.2011 Bulletin 2011/51**

(21) Application number: **10741265.2**

(22) Date of filing: **10.02.2010**

(51) Int Cl.:
***C09J 175/04*** *(2006.01)* ***C09J 4/02*** *(2006.01)*
***C09J 7/02*** *(2006.01)* ***C09J 11/06*** *(2006.01)*
***C09J 133/02*** *(2006.01)* ***C09J 133/04*** *(2006.01)*
***G02B 5/30*** *(2006.01)* ***G02F 1/1335*** *(2006.01)*

(86) International application number:
**PCT/JP2010/051982**

(87) International publication number:
**WO 2010/092988 (19.08.2010 Gazette 2010/33)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.02.2009 JP 2009032786**

(71) Applicant: **Soken Chemical & Engineering Co., Ltd.**
**Toshima-ku**
**Tokyo 171-8531 (JP)**

(72) Inventors:
- **KOYAMA, Yuji**
**Sayama-shi**
**Saitama 350-1320 (JP)**
- **AN, Mingxing**
**Sayama-shi**
**Saitama 350-1320 (JP)**

(74) Representative: **de Bresser, Sara Jean**
**Dehns**
**St Bride's House**
**10 Salisbury Square**
**London EC4Y 8JD (GB)**

(54) **RADIATION CURABLE ADHESIVE COMPOSITION FOR OPTICAL COMPONENTS AND ADHESIVE OPTICAL COMPONENT**

(57) [Object] Provided is a radiation-curable adhesive composition for an optical component, the radiation-curable adhesive composition exhibiting a high tensile strength and flexibility suitable for enabling stable adhesion between the optical component and an adherend when light-cured and exhibiting excellent durability.

[Solution] A radiation-curable adhesive composition for an optical component contains 100 parts by weight of a specific (meth)acrylic copolymer (A), 0.01 to 10 parts by weight of a specific radiation-curable acrylic compound (B), 1 to 30 parts by weight of a specific radiation-curable acrylic compound (C), 0.1 to 10 parts by weight of a hydrogen abstraction-type photopolymerization initiator (D), 0.01 to 10 parts by weight of an isocyanate crosslinking agent (E), and 0.01 to 3 parts by weight of a silane compound (F), wherein the total amount of the amount of (B) mixed and the amount of (C) mixed is 3 to 40 parts by weight, and the amount of (C) mixed is larger than the amount of (B) mixed.



Printed by Jouve, 75001 PARIS (FR)

## Description

### Technical Field

The present invention relates to a radiation-curable adhesive composition for an optical component, and an adhesive optical component using the same. Specifically, the present invention relates to a radiation-curable adhesive composition for an optical component, the adhesive composition being used for bonding an optical component in a flat panel display (FPD), more specifically used for bonding an optical component such as a polarizing film to an adherend such as a liquid crystal cell, and an adhesive optical component using the same.

### Background Art

Laminates constituting an image display device such as a liquid crystal display device, an organic electroluminescence (EL) display devices, a plasma display panel (PDP), or the like include optical components (such as a polarizing film, a retardation film, an optical compensation film, a luminance-improving film, a light diffusion film, an antireflection film, an near-infrared-absorbing film, and an electromagnetic-wave-shielding film) bonded to each other with an adhesive therebetween.

Such an adhesive (adhesive composition for an optical component) for bonding such optical components requires not only adherence for bonding an optical component to an adherend but also a characteristic (durability) that stable adhesion is maintained between the optical component and the adherend after the bonding. Various adhesive compositions having these characteristics have been proposed. Acrylic adhesives are typically used from the standpoint that they have both transparency suitable for the application for bonding optical components and relatively good durability.

Meanwhile, recently, liquid crystal display devices and the like have been used for various applications and under various conditions. For example, they have been often used not only under the condition of room temperature but also under severe conditions of a high temperature and furthermore, a high temperature and a high humidity. Examples of applications under such severe conditions include applications to image display devices installed inside vehicles and measuring instruments for use outdoors.

In the case where a liquid crystal display device or the like is left to stand for a long time under such conditions, in particular, an optical component produced by using polyvinyl alcohol or the like as a raw material expands due to moisture absorption, resulting in dimensional deformation. In addition, once such dimensional deformation occurs, even if the temperature condition and the humidity condition are changed, the optical component does not completely return to its original dimensions. Unless a stress generated by this dimensional deformation is sufficiently absorbed or relieved by an adhesive composition bonding the optical component to a liquid crystal cell, detachment or floating occurs. As a result, problems such as light leakage and display unevenness (white spots) occur in the image display device. In particular, under high-temperature and high-humidity conditions, expansion deformation (dimensional deformation) of an optical component further increases. Thus, the above problems more likely occur in a liquid crystal cell.

For example, PTL 1 and PTL 2 disclose adhesive compositions having improved durability under high-temperature conditions or high-temperature and high-humidity conditions.

PTL 1 discloses "an adhesive composition containing 5 to 95 parts by mass of (A) a polymer having a (meth) acryloyloxy group, a weight-average molecular weight of 1,000 to 30,000, and a glass transition temperature of 0°C or lower (polymer (A)); and 5 to 95 parts by mass of (B) a polymer having a weight-average molecular weight of 200,000 to 2,000,000, and a glass transition temperature of 0°C or lower (polymer (B)) (where the total of the polymer (A) and the polymer (B) is 100 parts by mass)".

PTL 2 discloses "an adhesive for an optical component, the adhesive containing a polymer containing a (meth) acrylic acid ester as a main component, and a crosslinking agent, wherein the gel fraction of the adhesive is 30% or more and 60% or less, a sol component in the adhesive has a weight-average molecular weight of 100,000 or more and 500,000 or less measured by gel permeation chromatography (GPC), the molecular-weight distribution is 40 or more, and a polymer component having a molecular weight of 50,000 or less is 30% by weight or more and 80% by weight or less in the sol component".

### Citation List

#### Patent Literature

PTL 1: Japanese Unexamined Patent Application Publication No. 2006-316203
PTL 2: Japanese Unexamined Patent Application Publication No. 2003-34781

Summary of Invention

Technical Problem

However, in adhesive optical components including an adhesive layer composed of any of the above adhesives for an optical component, there is still a room for improving durability and light leakage resistance under high-temperature conditions and high-temperature and high-humidity conditions.

In view of the above problem in the related art, an object of the present invention is to provide a radiation-curable adhesive composition for an optical component, the adhesive composition being capable of exhibiting excellent durability even under high-temperature conditions and high-temperature and high-humidity conditions and capable of suppressing occurrence of light leakage when the adhesive composition is used for bonding a liquid crystal cell to an optical component, and an adhesive optical component using the same.

Solution to Problem

As a result of intensive studies in order to solve the above problem, the inventors of the present invention found that an adhesive composition containing specific components exhibits a high tensile strength and flexibility suitable for enabling stable adhesion between an optical component and an adherend when light-cured, and exhibits excellent durability even under high-temperature conditions and high-temperature and high-humidity conditions, and that when the adhesive composition is used for bonding a liquid crystal cell to an optical component, occurrence of a problem such as light leakage can be significantly suppressed. This finding led to the completion of the present invention. The gist of the present invention is as follows.

A radiation-curable adhesive composition for an optical component of the present invention contains 100 parts by weight of a (meth)acrylic copolymer (A) composed of 80% to 99.8% by mass of an alkyl (meth)acrylate (a1), 0.1% to 10% by mass of a carboxyl-group-containing (meth)acrylic monomer (a2), and 0.1% to 10% by mass of a hydroxyl-group-containing (meth)acrylic monomer (a3) (where the total amount of (a1) to (a3) is 100% by mass), the (meth)acrylic copolymer (A) having a glass transition temperature of -20°C or lower and a weight-average molecular weight of 500,000 to 2,000,000; 0.01 to 10 parts by weight of a radiation-curable acrylic compound (B) represented by general formula (1) below:

[Chem. 1]

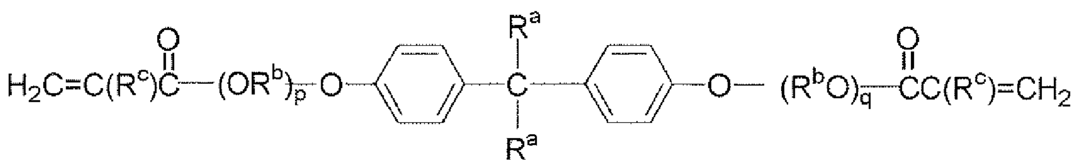

(1)

(where $R^a$ represents hydrogen or an alkyl group having 1 to 5 carbon atoms, $R^b$ represents an alkyl group having 2 to 4 carbon atoms, and $R^c$ represents hydrogen or a methyl group, p and q each represent an integer, and the sum of p and q is 4 to 12); 1 to 30 parts by weight of a radiation-curable acrylic compound (C) represented by general formula (2) or (3) below:

[Chem. 2]

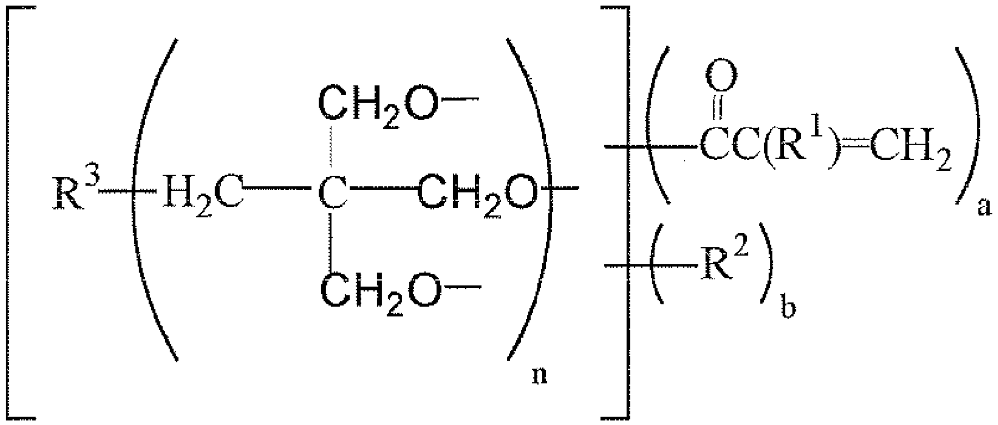

(2)

(where n is an integer of 1 to 5, a and b each represent an integer, a represents an integer of 3 to 10, and the relationship a + b = 2n + 2 is satisfied,
$R^1$ represents hydrogen or a methyl group,
$R^2$ represents a hydrogen atom, a hydrocarbon group which may have a substituent, an oxygen-containing functional group which may have a substituent, or a nitrogen-containing functional group which may have a substituent)

[Chem. 3]

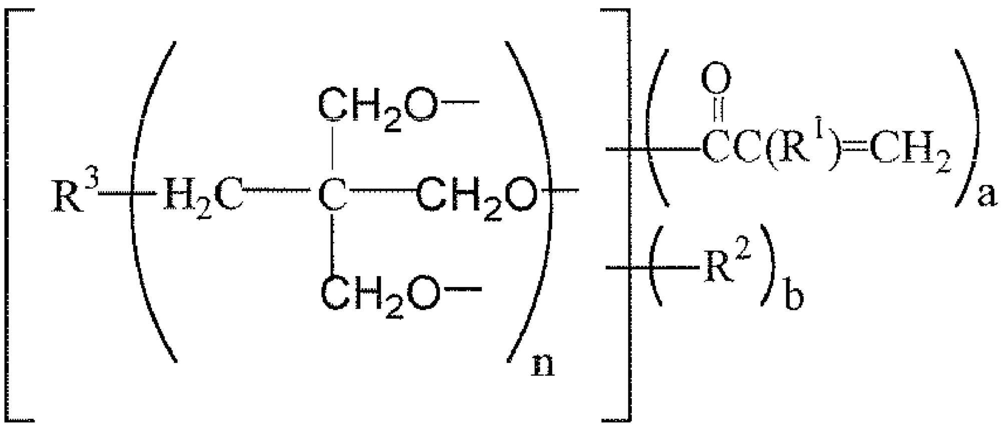

(3)

(where n is an integer of 1 to 5,
a and b each represent an integer, a represents an integer of 3 to 10, and the relationship a + b = 2n + 1 is satisfied,
$R^1$ represents hydrogen or a methyl group,
$R^2$ and $R^3$ each independently represent a hydrogen atom, a hydrocarbon group which may have a substituent, an oxygen-containing functional group which may have a substituent, or a nitrogen-containing functional group which may have a substituent);
0.1 to 10 parts by weight of a hydrogen abstraction-type photopolymerization initiator (D);
0.01 to 10 parts by weight of an isocyanate crosslinking agent (E) having two or more isocyanate groups in its molecule; and
0.01 to 3 parts by weight of a silane compound (F) having an organic functional group having reactivity with a carboxyl

group,

in which the total amount of the amount of radiation-curable acrylic compound (B) mixed and the amount of radiation-curable acrylic compound (C) mixed is 3 to 40 parts by weight, and the amount of radiation-curable acrylic compound (C) mixed is larger than the amount of radiation-curable acrylic compound (B) mixed.

In addition, in the radiation-curable adhesive composition for an optical component of the present invention, the radiation-curable acrylic compound (B) is preferably at least one selected from the group consisting of bisphenol A polyethylene glycol diacrylate, α-phenyl-ω-acryloyloxypolyoxyethylene-formaldehyde polycondensate, bisphenol A polypropylene glycol diacrylate, and bisphenol A diglycidyl ether-acrylic acid adduct.

Furthermore, in the radiation-curable adhesive composition for an optical component of the present invention, the radiation-curable acrylic compound (C) is preferably at least one selected from the group consisting of pentaerythritol triacrylate tolylene diisocyanate urethane polymer, dipentaerythritol hexaacrylate, pentaerythritol tetraacrylate, pentaerythritol triacrylate, and ditrimethylolpropane tetraacrylate.

An adhesive optical component of the present invention includes an optical component and an adhesive layer provided on one surface or both surfaces of the optical component, the adhesive layer being composed of the above radiation-curable adhesive composition for an optical component.

In addition, in the adhesive optical component of the present invention, the optical component is preferably an optical film selected from the group consisting of a polarizing film, a retardation film, an elliptically polarizing film, an antireflection film, a luminance-improving film, a light diffusion film, and an optical compensation film.

## Advantageous Effects of Invention

A radiation-curable adhesive composition for an optical component of the present invention can exhibit a high tensile strength and flexibility suitable for enabling stable adhesion between the optical component and an adherend when light-cured, and can exhibit excellent durability even under high-temperature conditions and high-temperature and high-humidity conditions. Furthermore, when the radiation-curable adhesive composition for an optical component of the present invention is used for bonding a liquid crystal cell to an optical component, occurrence of a problem such as light leakage can be suppressed.

## Description of Embodiments

The present invention will now be described more specifically.

A radiation-curable adhesive composition for an optical component according to the present invention contains 100 parts by weight of a specific (meth)acrylic copolymer (A), 0.01 to 10 parts by weight of a specific radiation-curable acrylic compound (B),

1 to 30 parts by weight of a specific radiation-curable acrylic compound (C),
0.1 to 10 parts by weight of a hydrogen abstraction-type photopolymerization initiator (D),
0.01 to 10 parts by weight of an isocyanate crosslinking agent (E) having two or more isocyanate groups in its molecule, and
0.01 to 3 parts by weight of a silane compound (F) having an organic functional group having reactivity with a carboxyl group,

in which the total amount of the amount of radiation-curable acrylic compound (B) mixed and the amount of radiation-curable acrylic compound (C) mixed is 3 to 40 parts by weight, and the amount of radiation-curable acrylic compound (C) mixed is larger than the amount of radiation-curable acrylic compound (B) mixed.

In order to improve various physical properties of the adhesive composition of the present invention, the adhesive composition may optionally contain other components.

The present invention will now be described specifically. For the sake of convenience, the above-mentioned (meth)acrylic copolymer (A), the radiation-curable acrylic compound (B), the radiation-curable acrylic compound (C), the hydrogen abstraction-type photopolymerization initiator (D), the crosslinking agent (E) having isocyanate groups, and the silane compound (F) having an organic functional group having reactivity with a carboxyl group may be referred to as "component (A)", "component (B)", "component (C)", "component (D)", "component (E)", and "component (F)", respectively.

The (meth)acrylic copolymer A (component (A)) used in the radiation-curable adhesive composition for an optical component of the present invention includes components (a1) to (a3) below serving as monomer components, has a glass transition temperature of -20°C or lower, and a weight-average molecular weight of 500,000 to 2,000,000.
Alkyl (meth)acrylate monomer (a1) 80% to 99.8% by mass
Carboxyl-group-containing (meth)acrylic monomer (a2) 0.1% to 10% by mass

Hydroxyl-group-containing (meth)acrylic monomer (a3) 0.1% to 10% by mass
(In the component (A), the total amount of (a1) to (a3) is 100% by mass.)
The alkyl (meth)acrylate monomer (a1) is not particularly limited as long as the monomer is an alkyl methacrylate and/or an alkyl acrylate. Examples thereof include alkyl (linear or branched alkyl) (meth)acrylates such as methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl(meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth) acrylate, heptadecyl (meth)acrylate, and octadecyl (meth)acrylate. These may be used alone or in combination.

The carboxyl-group-containing (meth)acrylic monomer (a2) is not particularly limited as long as the monomer is a (meth)acrylic monomer having a carboxyl group. Examples thereof include addition polymerizable unsaturated aliphatic monocarboxylic acids such as (meth)acrylic acid, $\alpha$-ethylacrylic acid, crotonic acid, $\alpha$-methylcrotonic acid, $\alpha$-ethylcrotonic acid, isocrotonic acid, tiglic acid, and angelic acid; and addition polymerizable unsaturated aliphatic dicarboxylic acids such as maleic acid, fumaric acid, itaconic acid, citraconic acid, mesaconic acid, glutaconic acid, and dihydromuconic acid. These may be used alone or in combination.

The hydroxyl-group-containing (meth)acrylic monomer (a3) is not particularly limited as long as the monomer is a (meth)acrylic monomer having a hydroxyl group. Examples thereof include 2-hydroxyethyl (meth)acrylate, 2-hydroxypropyl (meth)acrylate, 6-hydroxyhexyl (meth)acrylate, 4-hydroxybutyl (meth)acrylate, and mono(meth)acrylates of an alkylene diol, e.g., polypropylene glycol mono(meth)acrylate and 1,6-hexanediol mono(meth)acrylate; and (meth)acrylamides such as N-hydroxyethyl (meth)acrylamide and N-hydroxypropyl (meth)acrylamide. These may be used alone or in combination. Among these, 4-hydroxybutyl (meth)acrylate and 2-hydroxyethyl (meth)acrylate are preferable.

With regard to the amounts of components (a1) to (a3) in the component (A), the amount of (a1) is 80% to 99.8% by mass, the amount of (a2) is 0.1% to 10% by mass, and the amount of (a3) is 0.1% to 10% by mass; preferably, the amount of (a1) is 84% to 99.8% by mass, the amount of (a2) is 0.1% to 8% by mass, and the amount of (a3) is 0.1% to 8% by mass; and more preferably, the amount of (a1) is 90% to 99.8% by mass, the amount of (a2) is 0.1% to 5% by mass, and the amount of (a3) is 0.1% to 5% by mass. By controlling the amounts of components (a1) to (a3) to be the above ratio, excellent durability can be imparted without impairing other physical properties such as removability.

Note that (A) may optionally contain another monomer (a4) in addition to the components (a1) to (a3). Examples of the other monomer (a4) include alkoxyalkyl (meth)acrylates such as methoxyethyl (meth)acrylate and ethoxyethyl (meth)acrylate; epoxy-group-containing (meth)acrylates such as glycidyl (meth)acrylate; acetoacetyl-group-containing (meth)acrylates such as acetoacetoxyethyl (meth)acrylate; aromatic monomers such as styrene, methylstyrene, and vinyltoluene; methacryloxypropylmethoxysilane; vinyl acetate; vinyl chloride; and (meth)acrylonitrile. The mixing ratio of the other monomer is preferably 0.1 to 10 parts by weight, and more preferably 0.1 to 5 parts by weight based on 100 parts by weight of the alkyl acrylate of the component (a).

Furthermore, the weight-average molecular weight (Mw) of the (meth)acrylic copolymer (A) measured by gel permeation chromatography (GPC) is 500,000 to 2,000,000, and preferably 500,000 to 1,800,000.

When the weight-average molecular weight (Mw) of the (meth)acrylic copolymer (A) measured by gel permeation chromatography (GPC) is within the above range, it is possible to exhibit a sufficient cohesive force even under high-temperature conditions and to suppress the generation of foam. In addition, a stress-relieving property of the adhesive decreases, and for example, when the adhesive is used for bonding a glass substrate to a polarizing plate, occurrence of a light leakage phenomenon in a peripheral end portion of the bonded surface can be suppressed.

The glass transition temperature (Tg) of the (meth)acrylic copolymer (A) is -20°C or lower, preferably -80°C to -30°C, and more preferably -70°C to -50°C. By specifying the Tg of the component (A) within this range, when an adhesive optical component including an adhesive layer composed of the adhesive composition of the present invention is bonded to an adherend, adhesiveness to the adherend can be made to be uniform. Note that the glass transition temperature (Tg) is calculated by the Fox equation.

A method for polymerizing the (meth)acrylic copolymer (A) used in the present invention is not particularly limited. The (meth)acrylic copolymer (A) can be polymerized by a known method such as solution polymerization, emulsion polymerization, or suspension polymerization. However, the (meth)acrylic copolymer (A) is preferably polymerized by solution polymerization because when the radiation-curable adhesive composition for an optical component of the present invention is produced by using a mixture containing a copolymer obtained by polymerization, the treatment process can be relatively easily performed in a short time.

In general, solution polymerization is conducted by charging a specific organic solvent, a monomer, a polymerization initiator, and, as required, a chain transfer agent in a polymerization tank, and causing a reaction by heating for several hours while stirring in a nitrogen stream or at a reflux temperature of the organic solvent.

In this case, at least a portion of the organic solvent, the monomer, and/or the polymerization initiator may be sequentially added.

Examples of the organic solvent for polymerization include aromatic hydrocarbons such as benzene, toluene, ethylbenzene, n-propylbenzene, tert-butylbenzene, o-xylene, m-xylene, p-xylene, tetralin, decalin, and aromatic naphtha; aliphatic or alicyclic hydrocarbons such as n-hexane, n-heptane, n-octane, isooctane, n-decane, dipentene, petroleum spirit, petroleum naphtha, and turpentine oil; esters such as ethyl acetate, n-butyl acetate, n-amyl acetate, 2-hydroxyethyl acetate, 2-butoxyethyl acetate, 3-methoxybutyl acetate, and methyl benzoate; ketones such as acetone, methyl ethyl ketone, methyl isobutyl ketone, isophorone, cyclohexanone, and methylcyclohexanone; glycol ethers such as ethylene glycol monomethyl ether, ethylene glycol monoethyl ether, ethylene glycol monobutyl ether, diethylene glycol monomethyl ether, diethylene glycol monoethyl ether, and diethylene glycol monobutyl ether; and alcohols such as methyl alcohol, ethyl alcohol, n-propyl alcohol, isopropyl alcohol, n-butyl alcohol, isobutyl alcohol, sec-butyl alcohol, and tert-butyl alcohol. These organic solvents may be used alone or as a mixture of two or more types of the solvents.

Among these organic solvents for polymerization, in polymerization of the (meth)acrylic copolymer (A), organic solvents that do not easily cause chain transfer during the polymerization reaction, for example, esters and ketones are preferably used. In particular, from the standpoint of solubility of the (meth)acrylic copolymer (A), the ease of the polymerization reaction, etc., the use of ethyl acetate, methyl ethyl ketone, acetone, or the like is preferable.

As the polymerization initiator, organic peroxides, azo compounds, and the like that can be used in normal solution polymerization can be used.

Examples of the organic peroxides include tert-butyl hydroperoxide, cumene hydroxide, dicumyl peroxide, benzoyl peroxide, lauroyl peroxide, caproyl peroxide, di-isopropyl peroxydicarbonate, di-2-ethylhexyl peroxydicarbonate, tert-butyl peroxypivalate, 2,2-bis(4,4-di-tert-butylperoxy cyclohexyl)propane, 2,2-bis(4,4-di-tert-amylperoxy cyclohexyl) propane, 2,2-bis(4,4-di-tert-octylperoxy cyclohexyl)propane, 2,2-bis(4,4-di-$\alpha$-cumylperoxy cyclohexyl)propane, 2,2-bis (4,4-di-tert-butylperoxy cyclohexyl)butane, and 2,2-bis(4,4-di-tert-octylperoxy cyclohexyl)butane. Examples of the azo compounds include 2,2'-azobisisobutyronitrile, 2,2'-azobis-2,4-dimethylvaleronitrile, and 2,2'-azobis-4-methoxy-2,4-dimethylvaleronitrile.

Among these organic peroxides, in polymerization of the (meth)acrylic copolymer (A), polymerization initiators that do not cause a graft reaction during the polymerization reaction are preferable, and azo compounds are particularly preferable. The amount of polymerization initiator used is usually 0.01 to 2 parts by weight, and preferably 0.1 to 1 part by weight based on 100 parts by weight of the total of the monomers.

In producing the (meth)acrylic copolymer (A) used in the present invention, a chain transfer agent is not usually used, but may be used as required so long as the object and advantages of the present invention are not impaired.

Examples of the chain transfer agent include cyanoacetic acid; alkyl esters of cyanoacetic acid, the alkyl esters having 1 to 8 carbon atoms; bromoacetic acid; alkyl esters of bromoacetic acid, the alkyl esters having 1 to 8 carbon atoms; aromatic compounds such as anthracene, phenanthrene, fluorene, and 9-phenylfluorene; aromatic nitro compounds such as p-nitroaniline, nitrobenzene, dinitrobenzene, p-nitrobenzoic acid, p-nitrophenol, and p-nitrotoluene; benzoquinone derivatives such as benzoquinone and 2,3,5,6-tetramethyl-p-benzoquinone; borane derivatives such as tributylborane; halogenated hydrocarbons such as carbon tetrabromide, carbon tetrachloride, 1,1,2,2-tetrabromoethane, tribromoethylene, trichloroethylene, bromotrichloromethane, tribromomethane, and 3-chloro-1-propene; aldehydes such as chloral and furaldehyde; alkylmercaptans having 1 to 18 carbon atoms; aromatic mercaptans such as thiophenol and toluene mercaptan; mercaptoacetic acid and alkyl esters of mercaptoacetic acid, the alkyl esters having 1 to 10 carbon atoms; hydroxyalkyl mercaptans having 1 to 12 carbon atoms; terpenes such as pinene and terpinolene.

The polymerization temperature is usually in the range of about 30°C to 180°C, preferably 40°C to 150°C, and more preferably 50°C to 90°C.

Note that, in the case where unreacted monomers are contained in a polymer obtained by a solution polymerization method or the like, the polymer can be purified by a reprecipitation method with methanol or the like to remove the monomers.

The radiation-curable adhesive composition for an optical component of the present invention contains 0.01 to 10 parts by weight of a radiation-curable acrylic compound (B) and 1 to 30 parts by weight of a radiation-curable acrylic compound (C) based on 100 parts by weight of the component (A). The component (B), the component (C), and a hydrogen abstraction-type photopolymerization initiator (D) described below generate crosslinking between the component (A) and the component (B) or the component (C), or between the component (B) and the component (C) by a radical chain reaction when the radiation-curable adhesive composition for an optical component of the present invention is irradiated with actinic rays such as ultraviolet (UV) rays. As a result, a three-dimensional polymer structure having a very high crosslinking density is formed from the radiation-curable adhesive composition for an optical component. Such a three-dimensional polymer structure has a satisfactory tensile strength even under high-temperature conditions or high-temperature and high-humidity conditions, and thus can contribute to exhibit excellent durability.

The radiation-curable acrylic compound (B) is represented by general formula (1) below.

[Chem. 4]

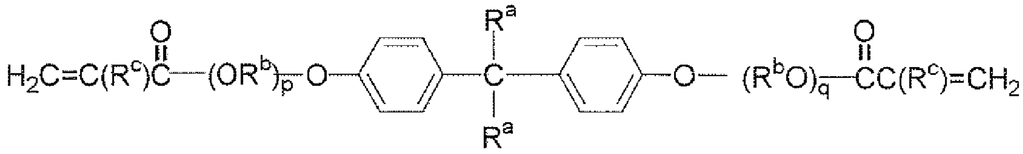

(1)

In general formula (1) above, $R^a$ represents hydrogen or an alkyl group having 1 to 5 carbon atoms. $R^b$ represents an alkyl group having 2 to 4 carbon atoms. $R^c$ represents hydrogen or a methyl group. In addition, p and q each represent an integer, and the sum of p and q is 4 to 12.

The component (B) is not particularly limited as long as the component (B) is a compound that satisfies the conditions of general formula (1) above. Examples of the component (B) include bisphenol A polyethylene glycol diacrylate (Chemical formula (4)), α-phenyl-ω-acryloyloxypolyoxyethylene-formaldehyde polycondensate (Chemical formula (5)), and bisphenol A polypropylene glycol diacrylate (Chemical formula (6)). These compounds may be used alone or in combination.

[Chem. 5]

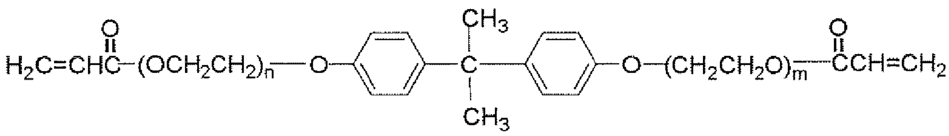

(4)

(In the above formula, m + n = 4)

[Chem. 6]

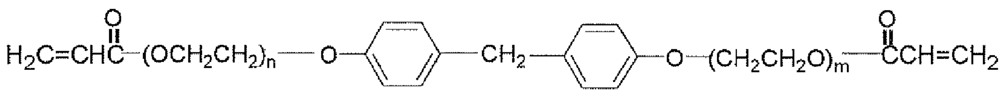

(5)

(In the above formula, m + n = 4)

[Chem. 7]

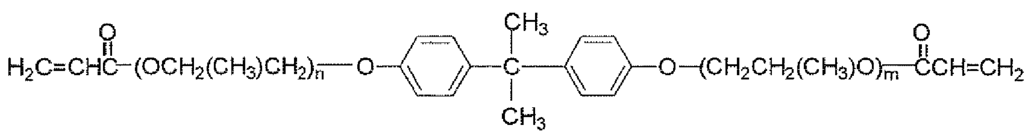

(6)

(In the above formula, m + n = 4)

The amount of component (B) mixed in the radiation-curable adhesive composition for an optical component

of the present invention is 0.01 to 10 parts by weight, preferably 0.01 to 8 parts by weight, and more preferably 0.01 to 6 parts by weight based on 100 parts by weight of the component (A) .

The radiation-curable acrylic compound B2 is represented by general formula (2) or (3) below.

[Chem. 8]

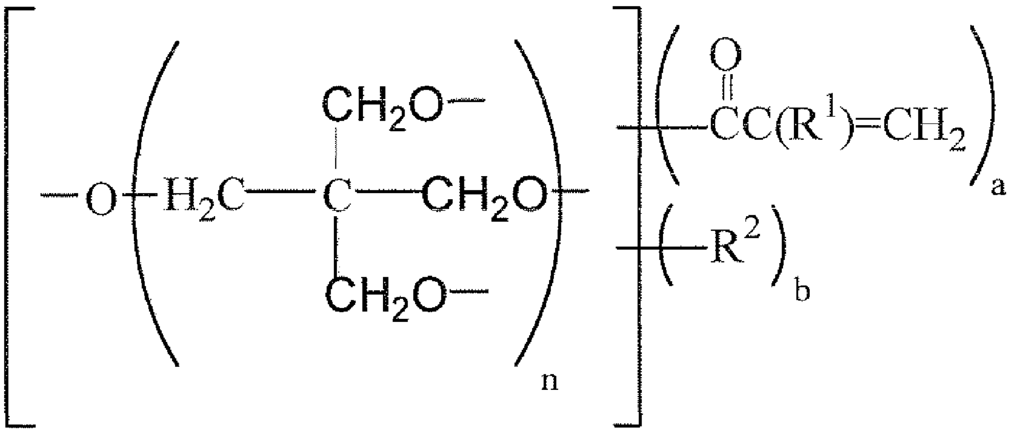

(2)

(n is an integer of 1 to 5. In addition, a and b each represent an integer, a represents an integer of 3 to 10, and the relationship a + b = 2n + 2 is satisfied.

$R^1$ represents hydrogen or a methyl group.

$R^2$ represents a hydrogen atom, a hydrocarbon group which may have a substituent, an oxygen-containing functional group which may have a substituent, or a nitrogen-containing functional group which may have a substituent.)

[Chem. 9]

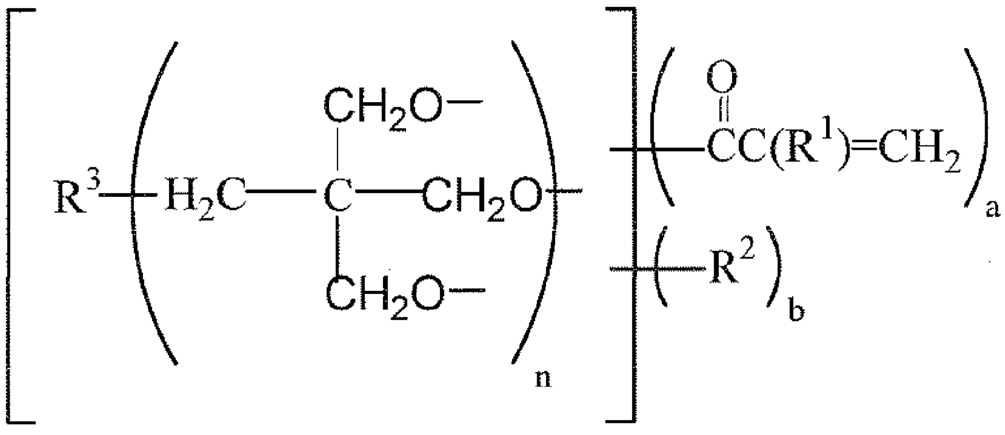

(3)

(n is an integer of 1 to 5.

a and b each represent an integer, a represents an integer of 3 to 10, and the relationship a + b = 2n + 1 is satisfied.

$R^1$ represents hydrogen or a methyl group.

$R^2$ and $R^3$ each independently represent a hydrogen atom, a hydrocarbon group which may have a substituent, an oxygen-containing functional group which may have a substituent, or a nitrogen-containing functional group which may have a substituent.)

In $R^2$ in general formula (2) above and $R^2$ and $R^3$ in general formula (3) above, the hydrocarbon group is not particularly

limited as long as the hydrocarbon group is a functional group consisting of carbon atoms and hydrogen atoms. Examples thereof include aliphatic hydrocarbon groups such as alkyl groups, alkenyl groups, and alkynyl groups; alicyclic hydrocarbon groups such as cycloalkyl groups, cycloalkenyl groups, and cycloalkynyl groups; and aromatic hydrocarbon groups such as a phenyl group, a naphthyl group, an anthryl group, and a phenanthryl group.

In $R^2$ in general formula (2) above and $R^2$ and $R^3$ in general formula (3) above, the oxygen-containing functional group is not particularly limited as long as the functional group contains an oxygen atom. Specific examples thereof include a carboxyl group, a hydroxyl group, an alcohol group, a carbonyl group, a quinone group, a lactone group, an epoxy group, a ketone group, acrylic acid, a nitro group, a sulfone group, and phosphoric acid. Examples thereof further include anhydrides obtained by condensation of compounds having any of these groups, and esterified products and alkali salts of such compounds.

In $R^2$ in general formula (2) above and $R^2$ and $R^3$ in general formula (3) above, the nitrogen-containing functional group is not particularly limited as long as the functional group contains a nitrogen atom. Examples thereof include an amino group, an amide group, an imino group, an imidazole group, a nitrile group, and a pyridyl group.

The radiation-curable acrylic compound (C) is not particularly limited as long as the radiation-curable acrylic compound (C) is a compound represented by general formula (2) or (3) above. Examples thereof include, as shown by chemical formulae below, pentaerythritol triacrylate tolylene diisocyanate urethane prepolymer (chemical formula (7)), dipentaerythritol hexaacrylate (chemical formula (8)), pentaerythritol tetraacrylate (chemical formula (9)), pentaerythritol triacrylate (chemical formula (10)), ditrimethylolpropane tetraacrylate (chemical formula (11)), trimethylolpropane acrylate (chemical formula (12)), dipentaerythritol triacrylate (chemical formula (13)), dipentaerythritol triacrylate (chemical formula (14)), acrylic acid esters of trimethylolpropane propylene oxide (chemical formulae (15) and (16)), and pentaerythritol triacrylate isophorone diisocyanate urethane acrylate (chemical formula (17)).

[Chem. 10]

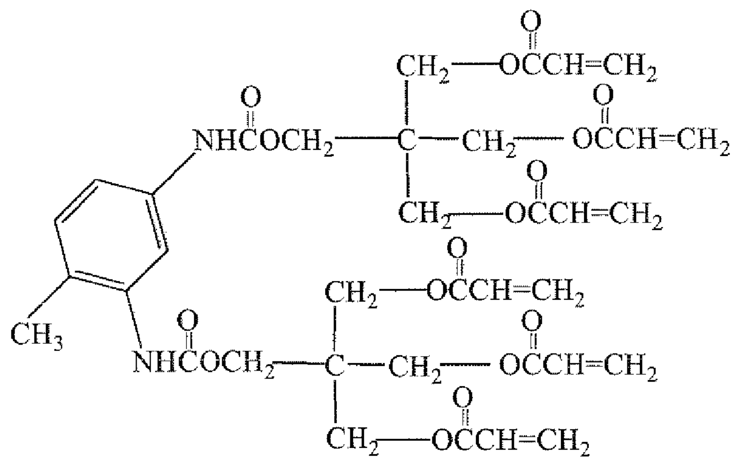

(7)

[Chem. 11]

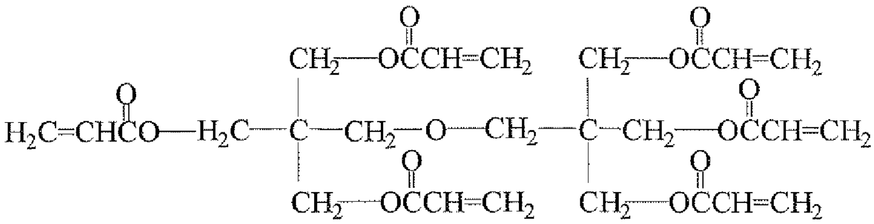

(8)

[Chem. 12]

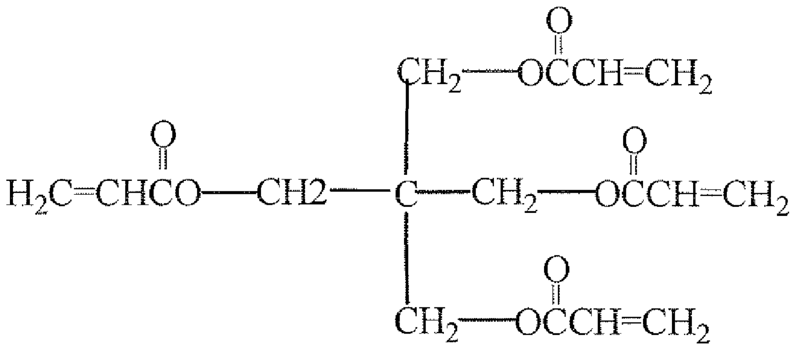

(9)

[Chem. 13]

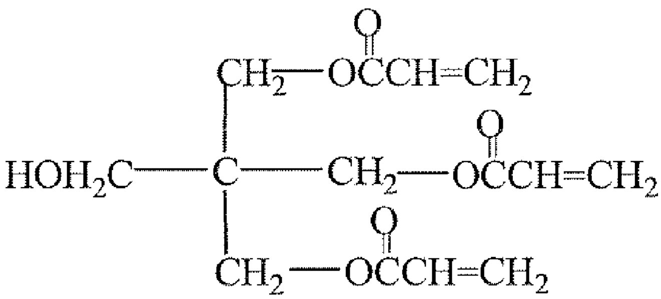

(1 0)

[Chem. 14]

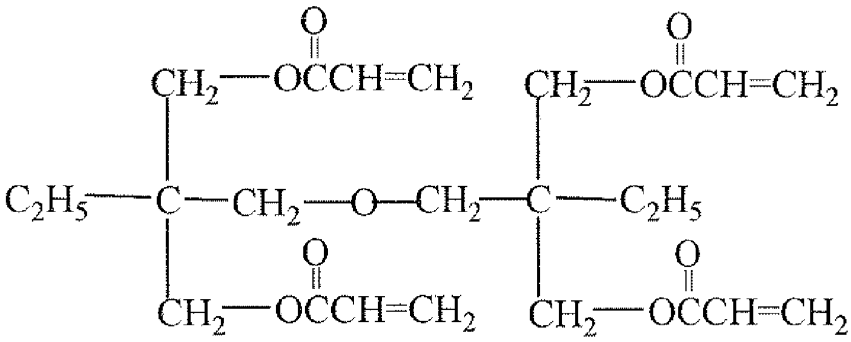

(1 1)

[Chem. 15]

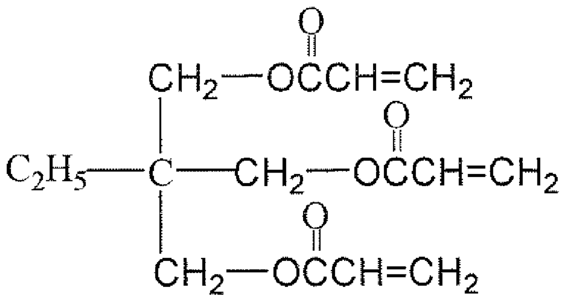

(1 2)

[Chem. 16]

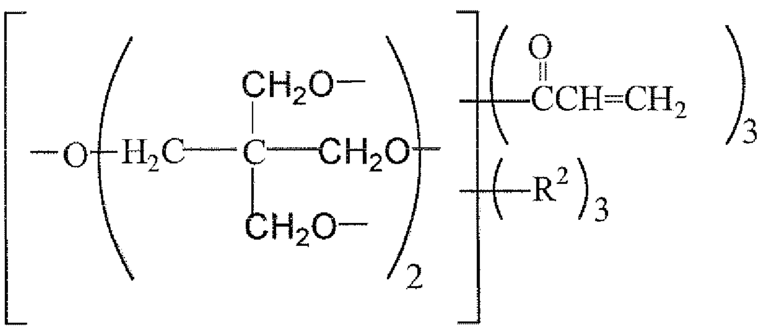

(1 3)

($R^2$ represents a hydrogen atom, a hydrocarbon group which may have a substituent, an oxygen-containing functional group which may have a substituent, or a nitrogen-containing functional group which may have a substituent.)

[Chem. 17]

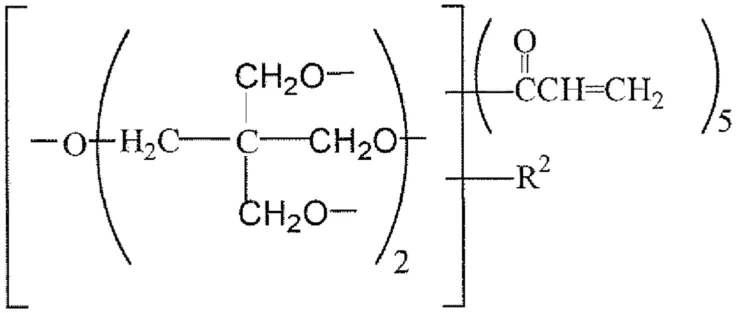

(1 4)

($R^2$ represents a hydrogen atom, a hydrocarbon group which may have a substituent, an oxygen-containing functional group which may have a substituent, or a nitrogen-containing functional group which may have a substituent.)

[Chem. 18]

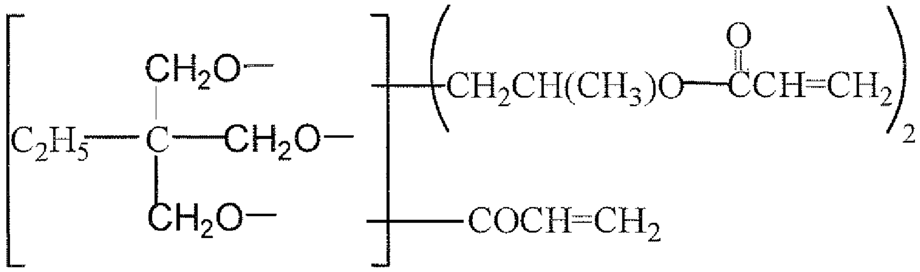

(1 5)

[Chem. 19]

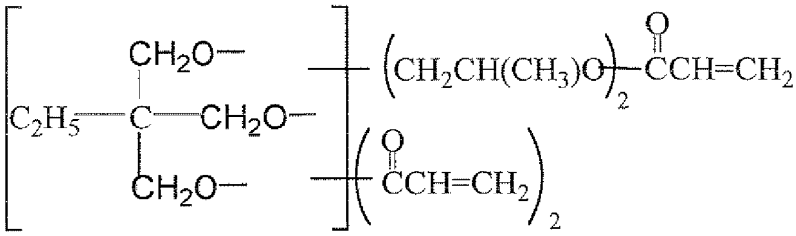

(1 6)

[Chem. 20]

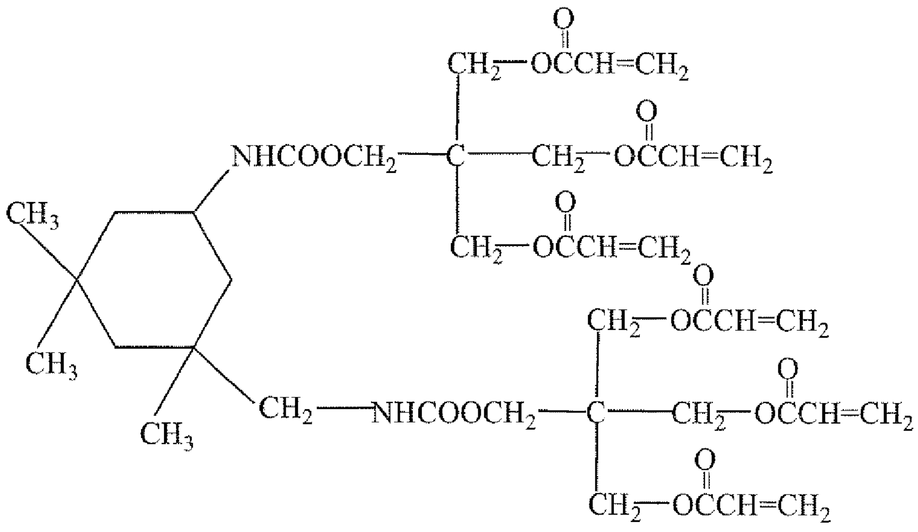

(1 7)

The amount of component (C) mixed in the radiation-curable adhesive composition for an optical component of the present invention is 1 to 30 parts by weight, preferably 1 to 25 parts by weight, and more preferably 1 to 20 parts by weight based on 100 parts by weight of the component (A).

The total amount of component (B) and component (C) in the radiation-curable adhesive composition for an optical component of the present invention is 3 to 40 parts by weight, preferably 3 to 35 parts by weight, and more preferably 5 to 30 parts by weight based on 100 parts by weight of the component (A). By controlling the total amount within this range, it is possible to impart a high tensile strength necessary for improving durability, and moderate flexibility necessary for maintaining stable adhesion between an optical component and an adherend.

In addition, the amount of component (C) mixed in the radiation-curable adhesive composition for an optical component is larger than the amount of component (B) mixed therein, and a quantitative ratio of the amount of component (C) mixed to the amount of component (B) mixed (the amount of component (C) mixed/the amount of component (B) mixed) is preferably 3.5 to 200, and more preferably 4 to 150. By controlling the quantitative ratio of the amount of component (C) mixed to the amount of component (B) mixed (the amount of component (C) mixed/the amount of component (B) mixed) within this range, it is possible to impart a high tensile strength necessary for improving durability, and moderate flexibility necessary for maintaining stable adhesion between an optical component and an adherend.

The radiation-curable adhesive composition for an optical component of the present invention contains 0.1 to 10 parts by weight of the hydrogen abstraction-type photopolymerization initiator (D) based on 100 parts by weight of the component (A) for the purpose of curing the adhesive composition by actinic rays such as ultraviolet rays.

Examples of the component (D) include acetophenones such as acetophenone, methoxyacetophenone, 2,2-diethoxyacetophenone, p-dimethylaminoacetophenone, 2,2-dimethoxy-2-phenylacetophenone, α-hydroxy-α,α'-dimethylacetophenone, 2-hydroxy-2-cyclohexylacetophenone, and 2-methyl-1-[4-(methylthio)phenyl]-2-morpholinopropanone-1; benzoin; benzoin ethers such as benzoin methyl ether, benzoin ethyl ether, and benzoin isopropyl butyl ether; ketones such as benzophenone, 2-chlorobenzophenone, p,p'-dichlorobenzophenone, N,N'-tetramethyl-4,4'-diaminobenzophenone, and 4-(2-hydroxyethoxy)phenyl(2-hydroxy-2-propyl)ketone; thioxanthones such as thioxanthone, 2-chlorothioxanthone, and 2-methylthioxanthone; phosphine oxides such as bisacylphosphine oxide and benzoylphosphine oxide; ketals such as benzyl dimethyl ketal; and quinones such as camphane-2,3-dione and phenanthrenequinone. These may be used alone or in combination.

The amount of component (D) mixed in the radiation-curable adhesive composition for an optical component of the present invention is 0.1 to 10 parts by weight, preferably 0.1 to 8 parts by weight, and more preferably 0.1 to 6 parts by weight based on 100 parts by weight of the component (A).

The radiation-curable adhesive composition for an optical component of the present invention contains 0.01 to 10 parts by weight of an isocyanate crosslinking agent (E) having two or more isocyanate groups in its molecule.

The isocyanate crosslinking agent (E) is not particularly limited as long as the crosslinking agent (E) is an isocyanate crosslinking agent having, in its molecule, two or more isocyanate groups, which can be crosslinked with hydroxyl groups of the (meth)acrylic copolymer (A) at room temperature or under heating. Examples thereof include isocyanate monomers such as tolylene diisocyanate, chlorophenylene diisocyanate, hexamethylene diisocyanate, tetramethylene diisocyanate, isophorone diisocyanate, diphenylmethane diisocyanate, and hydrogenated diphenylmethane diisocyanate; and isocyanate compounds and isocyanurate compounds obtained by adding any of these compounds to a divalent or higher-valent alcohol compound such as trimethylolpropane.

Examples thereof further include urethane prepolymer isocyanates obtained by an addition reaction between an isocyanate compound and a known polyether polyol, polyester polyol, acrylic polyol, polybutadiene polyol, polyisoprene polyol, or the like.

The amount of component (E) mixed in the radiation-curable adhesive composition for an optical component of the present invention is 0.1 to 10 parts by weight, preferably 0.1 to 8 parts by weight, and more preferably 0.1 to 6 parts by weight based on 100 parts by weight of the component (A). When the component (E) is contained within this range, the gel fraction after the crosslinking of the adhesive composition can be easily controlled.

The radiation-curable adhesive composition for an optical component of the present invention contains 0.01 to 3 parts by weight of a silane compound (F) having an organic functional group having reactivity with a carboxyl group based on 100 parts by weight of the component (A). Examples of the organic functional group that can react (couple) with a carboxyl group in the molecule of the (meth)acrylic copolymer (A) include an epoxy group, an amino group, a vinyl group, and an oxazoline group.

Specific examples of the component (F) include vinyltrimethoxysilane, vinyltriethoxysilane, β-(3,4-epoxycyclohexyl)ethyltrimethoxysilane, γ-glycidoxypropyltrimethoxysilane, γ-glycidoxypropyltrimethoxysilane, and γ-glycidoxypropylmethyldiethoxysilane.

The amount of component (F) mixed in the radiation-curable adhesive composition for an optical component of the present invention is 0.01 to 3 parts by weight, preferably 0.01 to 2 parts by weight, and more preferably 0.01 to 1.5 parts by weight based on 100 parts by weight of the component (A). When the component (F) is contained within this range, the gel fraction after the crosslinking of the adhesive composition can be easily controlled.

The gel fraction of the radiation-curable adhesive composition for an optical component of the present invention is preferably 80% to 99%. A gel fraction in the above range can impart a high tensile strength necessary for improving durability.

The above-mentioned gel fraction can be determined as follows. First, 0.1 g of an adhesive composition is placed in a sample bottle, 30 cc of ethyl acetate is added thereto, and the sample bottle is shaken for 24 hours. The content in the sample bottle is then filtered with a 200-mesh stainless steel screen, and the residue on the screen is dried at 100°C for two hours, and a dry weight thereof is measured. The gel fraction is determined by formula [I] below.

$$\text{Gel fraction (\%)} = (\text{dry weight}/\text{weight of placed adhesive}) \times 100 \cdots [I]$$

An adhesive optical component according to the present invention includes an optical component and an adhesive layer provided on one surface or both surfaces of the optical component, the adhesive layer being composed of the above-described radiation-curable adhesive composition for an optical component.

Herein, the optical component is used in various image display devices such as a liquid crystal display, a plasma display, and an organic EL display. Examples of the optical component include optical films such as a polarizing film, a retardation film, a luminance-improving film, a hard coat film, an elliptically polarizing film, an antireflection film, a light diffusion film, an anti-glare film, an antistatic film, and an optical compensation film; and optical plates such as a polarizing plate, a retardation plate, a luminance-improving plate, an elliptically polarizing plate, an antireflection plate, a light diffusion plate, an anti-glare plate, an antistatic plate, and an optical compensation plate.

The adhesive optical component may be produced by applying the radiation-curable adhesive composition for an optical component onto one surface or both surfaces of an optical component by a gravure coater, a Mayer bar coater, an air knife coater, a roll coater, or the like, exposing the adhesive composition applied onto the optical component to actinic ray irradiation, drying and crosslinking the adhesive composition at room temperature or by heating. Alternatively, the adhesive optical component may be produced by forming an adhesive layer on a release film, transferring this adhesive layer to the optical component, and then performing actinic ray irradiation, drying, and crosslinking.

Herein, examples of the actinic rays include ultraviolet rays, laser beams, alpha rays, beta rays, gamma rays, X rays, and electron beams. From the standpoint of good controllability and handleability, and the cost, ultraviolet rays are preferably used. Examples of a light source of the ultraviolet rays include a high-pressure mercury vapor lamp, a microwave-excited lamp, and a chemical lamp.

The irradiation time of the ultraviolet rays varies depending on the thickness of the adhesive composition applied, but is usually 10 seconds to 5 minutes, and preferably 30 seconds to 3 minutes.

Before the use of the adhesive optical component, a release film may be stacked on the upper surface of the

adhesive layer in order to protect the adhesive layer.

The thickness of the adhesive layer is not particularly limited, but is usually 1 to 500 μm, and preferably about 5 to 300 μm.

EXAMPLES

The present invention will be described more specifically by way of Examples, but the present invention is not limited to the Examples.

(1) Raw materials of radiation-curable adhesive composition for optical component

Components contained in radiation-curable adhesive compositions for an optical component (hereinafter, simply referred to as "adhesive composition") used in adhesive polarizing films of Examples and Comparative Examples are as follows, and component ratios thereof are shown in Table 1. Note that numerical values in the table represent parts by weight on a solid content (non-volatile content) basis.

(A) Monomer components constituting acrylic polymer A (A-1) n-Butyl acrylate (BA)
(A-2) Acrylic acid (AA)
(A-3) 2-Hydroxyethyl acrylate (HEA)
(B-1) Bisphenol A polyethylene glycol diacrylate (KAYARAD R-551; manufactured by Nippon Kayaku Co., Ltd.)

[Chem. 21]

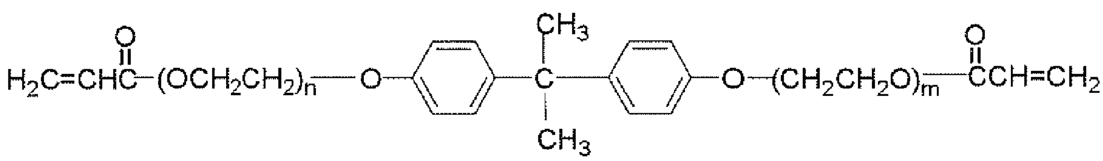

(In the above formula, m + n = 4)

(B-2) α-Phenyl-ω-acryloyloxypolyoxyethylene-formaldehyde polycondensate (KAYARAD R-712; manufactured by Nippon Kayaku Co., Ltd.)

[Chem. 22]

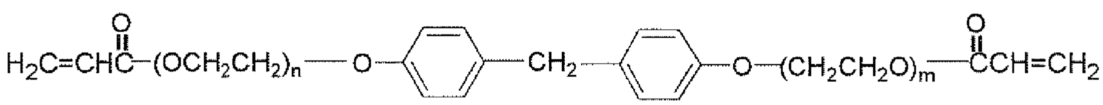

(In the above formula, m + n = 4)

(B-3) Bisphenol A polypropylene glycol diacrylate (BP-4PA; manufactured by Kyoeisha Chemical Co., Ltd.)

[Chem. 23]

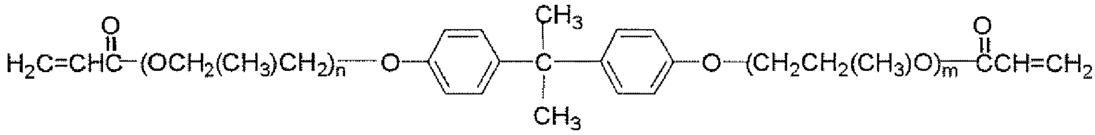

(In the above formula, m + n = 4)

(B-4) Bisphenol A diglycidyl ether-acrylic acid adduct (3000A; manufactured by Kyoeisha Chemical Co., Ltd.)

[Chem. 24]

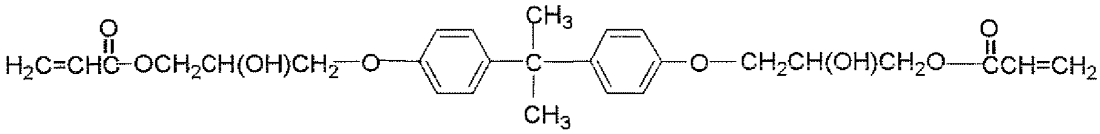

(In the above formula, m + n = 4)

(B-5) Polypropylene glycol diacrylate (APG-700; manufactured by Shin-Nakamura Chemical Co., Ltd.)

[Chem. 25]

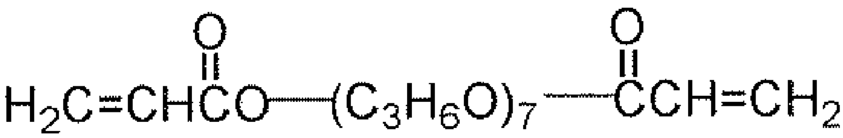

(C − 1)

(C-1) Pentaerythritol triacrylate tolylene diisocyanate urethane polymer (UA-306T; manufactured by Kyoeisha Chemical Co., Ltd.)

[Chem. 26]

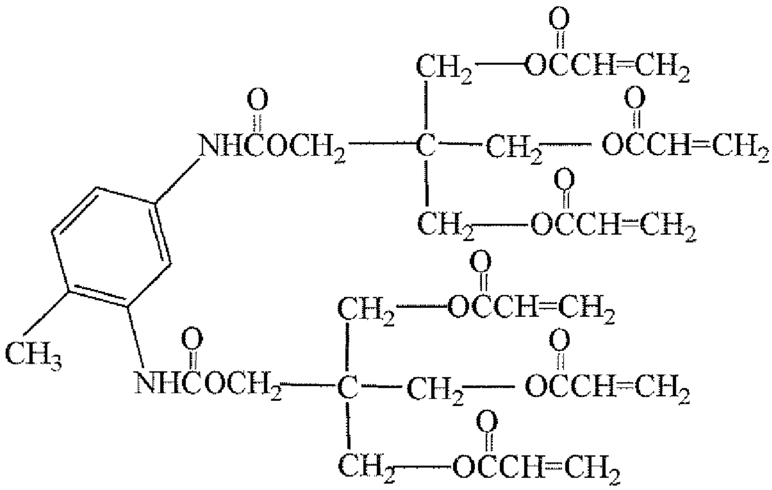

(C-2) Dipentaerythritol hexaacrylate (KAYARAD DPHA; manufactured by Nippon Kayaku Co., Ltd.)

[Chem. 27]

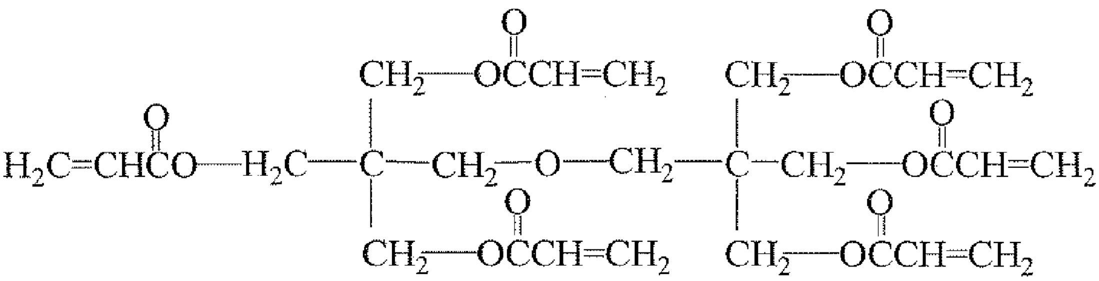

(C-3) Pentaerythritol tetraacrylate (PE-4A; manufactured by Kyoeisha Chemical Co., Ltd.)

[Chem. 28]

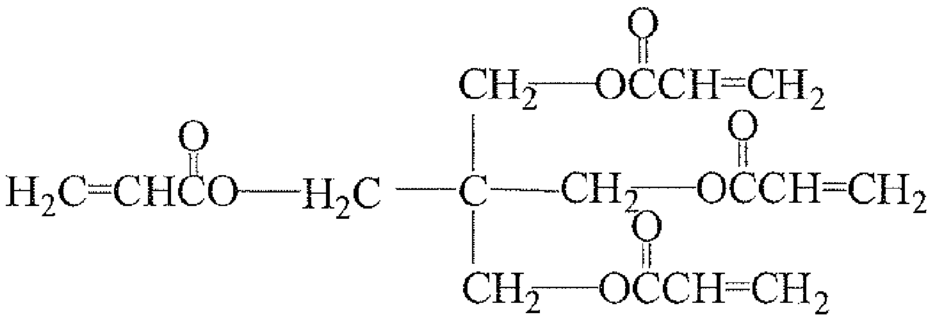

(C-4) Pentaerythritol triacrylate (PE-3A; manufactured by Kyoeisha Chemical Co., Ltd.)

[Chem. 29]

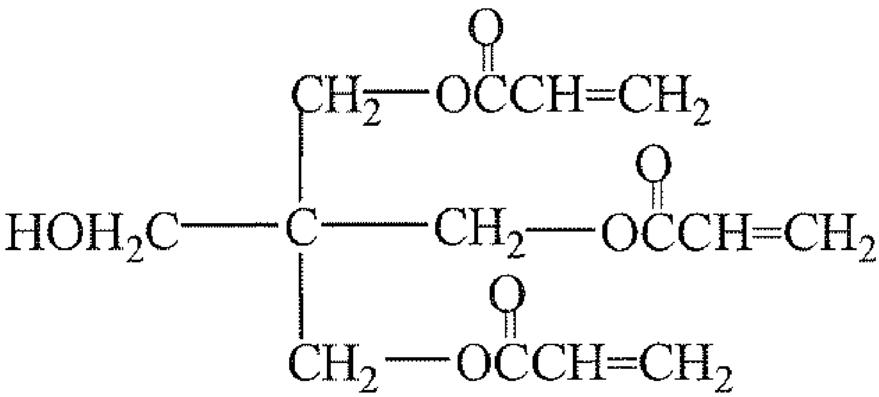

(C-5) Ditrimethylolpropane tetraacrylate (EB-140; manufactured by Daicel-UCB Co., Ltd.)

[Chem. 30]

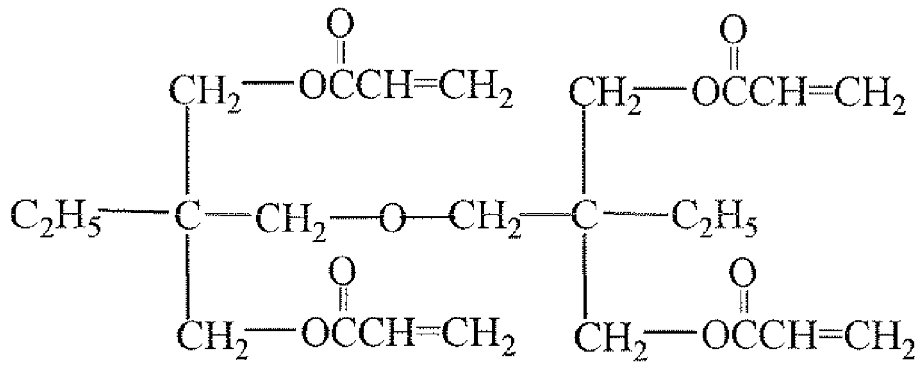

(D-1) IRGACURE 500 (1-hydroxy-cyclohexyl-phenyl ketone:benzophenone = 1:1 (hydrogen abstraction-type photopolymerization initiator); manufactured by Ciba Japan K.K.)
(D-2) IRGACURE 819 (bis(2,4,6-trimethylbenzoyl)-phenylphosphine oxide (non-hydrogen abstraction-type photopolymerization initiator); manufactured by Ciba Japan K.K.)
(E) CORONATE L (polyisocyanate compound; manufactured by Nippon Polyurethane Industry Co., Ltd.)
(F) KBM-403 (γ-glycidoxypropyltrimethoxysilane; manufactured by Shin-Etsu Chemical Co., Ltd.)

(2) Production of acrylic polymer solution A

First, 281.4 parts by weight of butyl acrylate (BA), 18 parts by weight of acrylic acid (AA), 0.6 parts by weight of 2-hydroxyethyl acrylate (2-HEA), and 300 parts by weight of ethyl acetate were charged in a reaction vessel equipped with a stirrer, a reflux condenser, a thermometer, and a nitrogen-introducing tube. Furthermore, 0.1 parts by weight of azobisisobutyronitrile (AIBN) was added to the reaction vessel, and air in this reaction vessel was replaced with nitrogen gas.
Next, the temperature of this reaction vessel was increased to 60°C while stirring in a nitrogen atmosphere, and the reaction mixture was allowed to react for four hours. After the completion of the reaction, the reaction mixture was diluted with ethyl acetate to obtain an acrylic polymer solution A (acrylic polymer concentration: 40% by mass). An acrylic polymer contained in the acrylic polymer solution A had a weight-average molecular weight of 1,500,000, and a glass transition temperature of -33°C.

(3) Examples and Comparative Examples

[EXAMPLE 1]

As shown in Table 1, 1 part by weight of KAYARAD R-551, 10 parts by weight of UA-306T, 4 parts by weight of IRGACURE 500, 0.5 parts by weight of CORONATE L, and 0.4 parts by weight of KBM-403 were added to 100 parts by weight of the acrylic polymer contained in the acrylic polymer solution A, and these components were mixed to obtain an adhesive composition 1.
The prepared adhesive composition 1 was applied onto a polyester film (PET3811 manufactured by Lintec Corporation), which has been subjected to a release treatment, to form an adhesive layer. The polyester film was further dried at 80°C for two minutes in a drying oven to obtain an adhesive sheet 1 including the adhesive layer having a thickness of 25 μm after drying.
The prepared adhesive sheet 1 was bonded to one surface of a polarizing film (composed of polyvinyl alcohol). Ultraviolet irradiation was conducted from the adhesive layer side of the adhesive sheet 1 using a UV irradiation device (light source: high-pressure mercury vapor lamp) with a conveyor at a lamp output of 160 W and at an irradiation distance of 10 cm while adjusting the conveyor speed so that the integrated amount of light was 200 mJ/cm$^2$. After the UV irradiation, the polarizing film onto which the adhesive sheet 1 was bonded was aged in a dark place at 23°C and at a humidity of 50% RH (relative humidity) for seven days. Thus, an adhesive polarizing film 1 was prepared.
Next, physical properties of the adhesive polarizing film 1 were evaluated in accordance with "(4) Evaluation conditions and criteria for physical property evaluation" described below. The results are shown in Table 2.

[EXAMPLE 2]

An adhesive composition 2 and an adhesive polarizing film 2 were prepared as in Example 1 except that UA-306T was changed to KAYARAD DPHA. The physical properties of the prepared adhesive polarizing film 2 were evaluated as in Example 1. The results are shown in Table 2.

[EXAMPLE 3]

An adhesive composition 3 and an adhesive polarizing film 3 were prepared as in Example 1 except that UA-306T was changed to PE-4A. The physical properties of the prepared adhesive polarizing film 3 were evaluated as in Example 1. The results are shown in Table 2.

[EXAMPLE 4]

An adhesive composition 4 and an adhesive polarizing film 4 were prepared as in Example 1 except that UA-306T was changed to PE-3A. The physical properties of the prepared adhesive polarizing film 4 were evaluated as in Example 1. The results are shown in Table 2.

[EXAMPLE 5]

An adhesive composition 5 and an adhesive polarizing film 5 were prepared as in Example 1 except that KAYARAD R-551 was changed to KAYARAD R-712. The physical properties of the prepared adhesive polarizing film 5 were evaluated as in Example 1. The results are shown in Table 2.

[EXAMPLE 6]

An adhesive composition 6 and an adhesive polarizing film 6 were prepared as in Example 2 except that KAYARAD R-551 was changed to KAYARAD R-712. The physical properties of the prepared adhesive polarizing film 6 were evaluated as in Example 2. The results are shown in Table 2.

[EXAMPLE 7]

An adhesive composition 7 and an adhesive polarizing film 7 were prepared as in Example 3 except that KAYARAD R-551 was changed to KAYARAD R-712. The physical properties of the prepared adhesive polarizing film 7 were evaluated as in Example 1. The results are shown in Table 2.

[EXAMPLE 8]

An adhesive composition 8 and an adhesive polarizing film 8 were prepared as in Example 4 except that KAYARAD R-551 was changed to KAYARAD R-712. The physical properties of the prepared adhesive polarizing film 8 were evaluated as in Example 4. The results are shown in Table 2.

[EXAMPLE 9]

An adhesive composition 9 and an adhesive polarizing film 9 were prepared as in Example 2 except that KAYARAD R-551 was changed to BP-4PA. The physical properties of the prepared adhesive polarizing film 9 were evaluated as in Example 2. The results are shown in Table 2.

[EXAMPLE 10]

An adhesive composition 10 and an adhesive polarizing film 10 were prepared as in Example 9 except that KAYARAD DPHA was changed to EB-140. The physical properties of the prepared adhesive polarizing film 10 were evaluated as in Example 9. The results are shown in Table 2.

[EXAMPLE 11]

An adhesive composition 11 and an adhesive polarizing film 11 were prepared as in Example 2 except that the amount of KAYARAD R-551 mixed was changed from 1.0 part by weight to 3.0 parts by weight, and the amount of

KAYARAD DPHA mixed was changed from 10 parts by weight to 15 parts by weight. The physical properties of the prepared adhesive polarizing film 11 were evaluated as in Example 2. The results are shown in Table 2.

[EXAMPLE 12]

An adhesive composition 12 and an adhesive polarizing film 12 were prepared as in Example 2 except that the amount of KAYARAD R-551 mixed was changed from 1.0 part by weight to 5.0 parts by weight, and the amount of KAYARAD DPHA mixed was changed from 10 parts by weight to 20 parts by weight. The physical properties of the prepared adhesive polarizing film 12 were evaluated as in Example 2. The results are shown in Table 2.

[EXAMPLE 13]

An adhesive composition 13 and an adhesive polarizing film 13 were prepared as in Example 10 except that the amount of IRGACURE 500 mixed was changed from 4.0 parts by weight to 6.0 parts by weight. The physical properties of the prepared adhesive polarizing film 13 were evaluated as in Example 10. The results are shown in Table 2.

[EXAMPLE 14]

An adhesive composition 14 and an adhesive polarizing film 14 were prepared as in Example 10 except that the amount of CORONATE L mixed was changed from 0.5 parts by weight to 6.0 parts by weight. The physical properties of the prepared adhesive polarizing film 14 were evaluated as in Example 10. The results are shown in Table 2.

[EXAMPLE 15]

An adhesive composition 15 and an adhesive polarizing film 15 were prepared as in Example 10 except that the amount of KBM-403 mixed was changed from 0.4 parts by weight to 1.0 part by weight. The physical properties of the prepared adhesive polarizing film 15 were evaluated as in Example 10. The results are shown in Table 2.

[COMPARATIVE EXAMPLE 1]

An adhesive composition 16 and an adhesive polarizing film 16 were prepared as in Example 1 except that neither KAYARAD R-551 nor UA-360T was incorporated. The physical properties of the prepared adhesive polarizing film 16 were evaluated as in Example 1. The results are shown in Table 2.

[COMPARATIVE EXAMPLE 2]

An adhesive composition 17 and an adhesive polarizing film 17 were prepared as in Example 1 except that neither KAYARAD R-551 nor UA-360T was incorporated, and that the amount of CORONATE L mixed was changed from 0.5 parts by weight to 4.0 parts by weight. The physical properties of the prepared adhesive polarizing film 17 were evaluated as in Example 1. The results are shown in Table 2.

[COMPARATIVE EXAMPLE 3]

An adhesive composition 18 and an adhesive polarizing film 18 were prepared as in Example 1 except that 1 part by weight of KAYARAD R-551 and 10 parts by weight of UA-306T were changed to 1 part by weight of 3000A and 15 parts by weight of PE-3A, respectively. The physical properties of the prepared adhesive polarizing film 18 were evaluated as in Example 1. The results are shown in Table 2.

[COMPARATIVE EXAMPLE 4]

An adhesive composition 19 and an adhesive polarizing film 19 were prepared as in Example 1 except that 1 part by weight of KAYARAD R-551 and 10 parts by weight of UA-306T were changed to 1 part by weight of APG-700 and 15 parts by weight of PE-3A, respectively. The physical properties of the prepared adhesive polarizing film 19 were evaluated as in Example 1. The results are shown in Table 2.

[COMPARATIVE EXAMPLE 5]

An adhesive composition 20 and an adhesive polarizing film 20 were prepared as in Example 4 except that 1

part by weight of KAYARAD R-551 was changed to 3 parts by weight of 3000A and 3 parts by weight of APG-700, and that 10 parts by weight of UA-306T was changed to 10 parts by weight of PE-3A. The physical properties of the prepared adhesive polarizing film 20 were evaluated as in Example 4. The results are shown in Table 2.

[COMPARATIVE EXAMPLE 6]

An adhesive composition 21 and an adhesive polarizing film 21 were prepared as in Example 1 except that KAYARAD R-551 was not incorporated, and that 10 parts by weight of UA-306T was changed to 10 parts by weight of PE-3A. The physical properties of the prepared adhesive polarizing film 21 were evaluated as in Example 1. The results are shown in Table 2.

[COMPARATIVE EXAMPLE 7]

An adhesive composition 22 and an adhesive polarizing film 22 were prepared as in Example 1 except that 1 part by weight of KAYARAD R-551 was changed to 5 parts by weight of KAYARAD R-712, and that UA-306T was not incorporated. The physical properties of the prepared adhesive polarizing film 22 were evaluated as in Example 1. The results are shown in Table 2.

[COMPARATIVE EXAMPLE 8]

An adhesive composition 23 and an adhesive polarizing film 23 were prepared as in Example 1 except that 1 part by weight of KAYARAD R-551 and 10 parts by weight of UA-306T were changed to 8 parts by weight of R-551 and 3 parts by weight of PE-3A, respectively. The physical properties of the prepared adhesive polarizing film 23 were evaluated as in Example 1. The results are shown in Table 2.

[COMPARATIVE EXAMPLE 9]

An adhesive composition 24 and an adhesive polarizing film 24 were prepared as in Example 1 except that 1 part by weight of KAYARAD R-551 and 10 parts by weight of UA-306T were changed to 1 part by weight of KAYARAD R-712 and 15 parts by weight of PE-3A, respectively, and that IRGACURE 500 was changed to IRGACURE 819. The physical properties of the prepared adhesive polarizing film 24 were evaluated as in Example 1. The results are shown in Table 2.

[COMPARATIVE EXAMPLE 10]

An adhesive composition 25 and an adhesive polarizing film 25 were prepared as in Example 10 except that the amount of BP-4PA mixed was changed from 1.0 part by weight to 12 parts by weight. The physical properties of the prepared adhesive polarizing film 25 were evaluated as in Example 10. The results are shown in Table 2.

[COMPARATIVE EXAMPLE 11]

An adhesive composition 26 and an adhesive polarizing film 26 were prepared as in Example 10 except that the amount of EB-140 mixed was changed from 10 parts by weight to 35 parts by weight. The physical properties of the prepared adhesive polarizing film 26 were evaluated as in Example 10. The results are shown in Table 2.

[COMPARATIVE EXAMPLE 12]

An adhesive composition 27 and an adhesive polarizing film 27 were prepared as in Example 2 except that the amount of IRGACURE 500 mixed was changed from 4.0 parts by weight to 11 parts by weight. The physical properties of the prepared adhesive polarizing film 27 were evaluated as in Example 2. The results are shown in Table 2.

[COMPARATIVE EXAMPLE 13]

An adhesive composition 28 and an adhesive polarizing film 28 were prepared as in Example 2 except that the amount of CORONATE L mixed was changed from 0.5 parts by weight to 11 parts by weight. The physical properties of the prepared adhesive polarizing film 28 were evaluated as in Example 2. The results are shown in Table 2.

[COMPARATIVE EXAMPLE 14]

An adhesive composition 29 and an adhesive polarizing film 29 were prepared as in Example 5 except that KBM-403 was not incorporated. The physical properties of the prepared adhesive polarizing film 29 were evaluated as in Example 5. The results are shown in Table 2.

[COMPARATIVE EXAMPLE 15]

An adhesive composition 30 and an adhesive polarizing film 30 were prepared as in Example 5 except that the amount of KBM-403 mixed was changed from 0.4 parts by weight to 4.0 parts by weight. The physical properties of the prepared adhesive polarizing film 30 were evaluated as in Example 5. The results are shown in Table 2.

[COMPARATIVE EXAMPLE 16]

An adhesive composition 31 and an adhesive polarizing film 31 were prepared as in Example 2 except that IRGACURE 500 was not incorporated. The physical properties of the prepared adhesive polarizing film 31 were evaluated as in Example 2. The results are shown in Table 2.

[COMPARATIVE EXAMPLE 17]

An adhesive composition 32 and an adhesive polarizing film 32 were prepared as in Example 2 except that CORONATE L was not incorporated. The physical properties of the prepared adhesive polarizing film 32 were evaluated as in Example 2. The results are shown in Table 2.

[Table 1]

Table 1

(parts by weight)

| | Adhesive composition | Acrylic polymer A | R-551 | R-712 | BP-4PA | 3000A | APG-700 | UA-306T | DPHA | PE-4A | PE-3A | EB14C | IRGACURE 500 | IRGACURE 819 | CORONATE L | KBM-403 |
|---|---|---|---|---|---|---|---|---|---|---|---|---|---|---|---|---|
| Example 1 | 1 | 100 | 1.0 | | | | | 10 | | | | | 4.0 | | 0.5 | 0.4 |
| Example 2 | 2 | 100 | 1.0 | | | | | | 10 | | | | 4.0 | | 0.5 | 0.4 |
| Example 3 | 3 | 100 | 1.0 | | | | | | | 10 | | | 4.0 | | 0.5 | 0.4 |
| Example 4 | 4 | 100 | 1.0 | | | | | | | | 10 | | 4.0 | | 0.5 | 0.4 |
| Example 5 | 5 | 100 | | 1.0 | | | | 10 | | | | | 4.0 | | 0.5 | 0.4 |
| Example 6 | 6 | 100 | | 1.0 | | | | | 10 | | | | 4.0 | | 0.5 | 0.4 |
| Example 7 | 7 | 100 | | 1.0 | | | | | | 10 | | | 4.0 | | 0.5 | 0.4 |
| Example 8 | 8 | 100 | | 1.0 | | | | | | | 10 | | 4.0 | | 0.5 | 0.4 |
| Example 9 | 9 | 100 | | | 1.0 | | | | 10 | | | | 4.0 | | 0.5 | 0.4 |
| Example 10 | 10 | 100 | | | 1.0 | | | | | | | 10 | 4.0 | | 0.5 | 0.4 |
| Example 11 | 11 | 100 | 3.0 | | | | | | 15 | | | | 4.0 | | 0.5 | 0.4 |
| Example 12 | 12 | 100 | 5.0 | | | | | | 20 | | | | 4.0 | | 0.5 | 0.4 |
| Example 13 | 13 | 100 | | | 1.0 | | | | | | | 10 | 6.0 | | 0.5 | 0.4 |

(continued)

(parts by weight)

| | Adhesive composition | Acrylic polymer A | R-551 | R-712 | BP-4PA | 3000A | APG-700 | UA-306T | DPHA | PE-4A | PE-3A | EB14C | IRGACURE 500 | IRGACURE 819 | CORONATE L | KBM-403 |
|---|---|---|---|---|---|---|---|---|---|---|---|---|---|---|---|---|
| Example 14 | 14 | 100 | | | 1.0 | | | | | | | 10 | 4.0 | | 6.0 | 0.4 |
| Example 15 | 15 | 100 | | | 1.0 | | | | | | | 10 | 4.0 | | 0.5 | 1.0 |
| C. Ex. 1 | 16 | 100 | | | | | | | | | | | 4.0 | | 0.5 | 0.4 |
| C. Ex. 2 | 17 | 100 | | | | | | | | | | | 4.0 | | 4.0 | 0.4 |
| C. Ex. 3 | 18 | 100 | | | | 1.0 | | | | | 15 | | 4.0 | | 0.5 | 0.4 |
| C. Ex. 4 | 19 | 100 | | | | | 1.0 | | | | 15 | | 4.0 | | 0.5 | 0.4 |
| C. Ex. 5 | 20 | 100 | | | | 3.0 | 3.0 | | | | 10 | | 4.0 | | 0.5 | 0.4 |
| C. Ex. 6 | 21 | 100 | | | | | | | | | 10 | | 4.0 | | 0.5 | 0.4 |
| C. Ex. 7 | 22 | 100 | | 5.0 | | | | | | | | | 4.0 | | 0.5 | 0.4 |
| C. Ex. 8 | 23 | 100 | 8.0 | | | | | | | | 3.0 | | 4.0 | | 0.5 | 0.4 |
| C. Ex. 9 | 24 | 100 | | 1.0 | | | | | | | 15 | | | 4.0 | 0.5 | 0.4 |
| C. Ex. 10 | 25 | 100 | | | 12 | | | | | | | 10 | 4.0 | | 0.5 | 0.4 |
| C. Ex. 11 | 26 | 100 | | | 1 | | | | | | | 35 | 4.0 | | 0.5 | 0.4 |
| C. Ex. 12 | 27 | 100 | 1 | | | | | | 10 | | | | 11 | | 0.5 | 0.4 |
| C. Ex. 13 | 28 | 100 | 1 | | | | | | 10 | | | | 4.0 | | 11 | 0.4 |

(continued)

(parts by weight)

| | Adhesive composition | Acrylic polymer A | R-551 | R-712 | BP-4PA | 3000A | APG-700 | UA-306T | DPHA | PE-4A | PE-3A | EB14C | IRGACURE 500 | IRGACURE 819 | CORONATE L | KBM-403 |
|---|---|---|---|---|---|---|---|---|---|---|---|---|---|---|---|---|
| C. Ex. 14 | 29 | 100 | | 1 | | | | 10 | | | | | 4.0 | | 0.5 | |
| C. Ex. 15 | 30 | 100 | | 1 | | | | 10 | | | | | 4.0 | | 0.5 | 0.4 |
| C. Ex. 16 | 31 | 100 | 1 | | | | | | 10 | | | | | | 0.5 | 0.4 |
| C. Ex. 17 | 32 | 100 | 1 | | | | | | 10 | | | | 4.0 | | | 0.4 |

C. Ex.: Comparative Example

(4) Evaluation conditions and criteria for physical property evaluation

<Light leakage resistance test>

(Evaluation method)

Adhesive polarizing films (310 × 385 mm) were bonded to a liquid crystal panel having a size of 19 inches in a cross Nicol state and left to stand in an atmosphere of 60°C and 95% RH (relative humidity) for 240 hours and further in an atmosphere of 23°C and 50% RH (relative humidity) for two hours. Subsequently, the test specimen taken from the atmosphere to a room was arranged in a cross Nicol state.
The test specimen was placed in a light box at a color temperature of 5,000 K, and whether light leakage occurred or not was examined by visual observation and by using a digital camera. The result was evaluated on the basis of four-level evaluation criteria described below.

(Evaluation criteria)

A: No light leakage was observed.
B: Light leakage was hardly observed.
C: Light leakage was observed in some degree.
D: Light leakage was noticeably observed.

<Durability test (85°C)>

(Evaluation method)

An adhesive polarizing film (310 × 385 mm) was bonded to non-alkali-treated glass having a size of 19 inches and left to stand in an atmosphere of 85°C for 240 hours and further in an atmosphere of 23°C and 50% RH (relative humidity) for two hours. Subsequently, the non-alkali-treated glass onto which the adhesive polarizing film was bonded was taken from the atmosphere to a room. A change in appearance such as foaming of the adhesive polarizing film was visually observed. The result was evaluated on the basis of four-level evaluation criteria described below.

(Evaluation criteria)

A: No change in appearance such as foaming was observed.
B: A change in appearance such as foaming was hardly observed.
C: A change in appearance such as foaming was observed in some degree.
D: A change in appearance such as foaming was noticeably observed.

<Durability test (60°C/95% RH (relative humidity))>

(Evaluation method)

An adhesive polarizing film (310 × 385 mm) was bonded to non-alkali-treated glass having a size of 19 inches and left to stand in an atmosphere of 60°C and 95% RH (relative humidity) for 240 hours and further in an atmosphere of 23°C and 50% RH (relative humidity) for two hours. Subsequently, the non-alkali-treated glass onto which the adhesive polarizing film was bonded was taken from the atmosphere to a room. A change in appearance such as detachment or foaming of the adhesive polarizing film was visually observed. The result was evaluated on the basis of four-level evaluation criteria described below.

(Evaluation criteria)

A: No change in appearance such as detachment or foaming was observed.

B: A change in appearance such as detachment or foaming was hardly observed.
C: A change in appearance such as detachment or foaming was observed in some degree.
D: A change in appearance such as detachment or foaming was noticeably observed.

<Test of adhesive force to glass>

An adhesive polarizing film (length: 75 mm × width: 25 mm) was bonded to a non-alkali-treated glass plate (325 × 400 mm), and pressure-bonded by rolling a 2-kg roller therealong in a reciprocating manner three times. The glass plate was then left to stand in an atmosphere of 23°C and 50% RH (relative humidity) for two hours. An adhesive force (units: N/25 mm) to glass was measured by a 90-degree peel test (peeling speed: 300 mm/min). This measurement was conducted using two adhesive polarizing films for each type of film. The average of the two measured values was defined as an adhesive force to glass of the adhesive polarizing film.

<Probe tack test>

In accordance with JIS Z0237, an adhesive polarizing film (length: 75 mm × width: 25 mm) was brought into contact with a columnar probe of a probe-tack device for probe tack for one second while applying a constant load in an atmosphere of 23°C and 50% RH (relative humidity). Subsequently, a force ($N/cm^2$) necessary for peeling the probe from the adhesive surface of the test specimen in the vertical direction was measured.
As for the measurement conditions, the diameter of the columnar probe was 5 mm, the contact speed and the peeling speed were each 10 ± 0.1 mm per second, the contact load was 0.98 ± 0.01 $N/cm^2$, and the contact time was 1.0 ± 0.1 seconds.
This measurement was conducted using ten adhesive polarizing films for each type of film. The average of the ten measured values (probe-tack values) was defined as the result. It is possible to determine that when the probe-tack value is 300 to 500 ($N/cm^2$), the adhesive subjected to the measurement has moderate flexibility necessary for maintaining stable adhesion between the polarizing film and the adherend.

<Shear load test>

A marked line was drawn at a position 10 mm from an end in a longitudinal direction of an adhesive polarizing film (length; 100 mm × width; 10 mm). The adhesive polarizing film was bonded to non-alkali-treated glass (length; 50 mm × width; 50 mm, mass; 0.2 kg) using the marked line as a marker such that the bonding area was 10 mm × 10 mm. Thus, a sample for measuring a shear load was prepared.
The sample for measuring a shear load was treated in an autoclave for two hours under the conditions of 50°C and 5 $kgf/cm^2$, and then left to stand for 24 hours in an atmosphere of 23°C and 50% RH (relative humidity).
Next, the adhesive polarizing film adhered to the sample for measuring a shear load was drawn at a shear rate of 0.1 mm/min in a shear direction using a tensile testing machine (manufactured by Instron), and the load was measured. A load when the displacement of the bonded portion between the adhesive polarizing film and the non-alkali-treated glass became 1 mm or when the adhesive polarizing film was detached from the glass was defined as a measured value (maximum shear load) (N).
This measurement was conducted using two adhesive polarizing films for each type of film. The average of the two measured values was defined as the result. Note that the magnitude of the maximum shear load and the magnitude of the tensile strength have a positive correlation.
[Table 2]

Table 2

| | Adhesive polarizing film | Evaluation | | | | | |
|---|---|---|---|---|---|---|---|
| | | Light leakage resistance | Durability (85°C) | Durability (65°C/95% RH) | Adhesive force to glass (g/25 mm) | probe Probe tack ($N/cm^2$) | Shear load (N) |
| Example 1 | 1 | A | A | A | 380 | 300 | 91.5 |
| Example 2 | 2 | A | A | A | 330 | 310 | 94.6 |

(continued)

| | Adhesive polarizing film | Evaluation | | | | | |
|---|---|---|---|---|---|---|---|
| | | Light leakage resistance | Durability (85°C) | Durability (65°C/95% RH) | Adhesive force to glass (g/25 mm) | probe Probe tack ($N/cm^2$) | Shear load (N) |
| Example 3 | 3 | B | A | A | 390 | 390 | 86.2 |
| Example 4 | 4 | B | A | A | 480 | 415 | 90.6 |
| Example 5 | 5 | A | A | A | 380 | 305 | 92.7 |
| Example 6 | 6 | A | A | A | 360 | 310 | 94.6 |
| Example 7 | 7 | B | A | A | 400 | 375 | 86.2 |
| Example 8 | 8 | B | A | A | 510 | 425 | 85.4 |
| Example 9 | 9 | A | A | A | 340 | 300 | 92.5 |
| Example 10 | 10 | B | A | A | 480 | 395 | 90.6 |
| Example 11 | 11 | A | A | A | 300 | 285 | 96.1 |
| Example 12 | 12 | A | A | B | 280 | 265 | 98.9 |
| Example 13 | 13 | A | A | B | 330 | 335 | 92.3 |
| Example 14 | 14 | A | A | A | 340 | 330 | 93.0 |
| Example 15 | 15 | B | A | A | 440 | 370 | 90.1 |
| C. Ex. 1 | 16 | D | B | B | 1300 | 590 | 8.3 |
| C. Ex. 2 | 17 | C | C | C | 910 | 540 | 70.6 |
| C. Ex. 3 | 18 | C | C | D | 210 | 120 | 82.1 |
| C. Ex. 4 | 19 | C | C | C | 300 | 220 | 72.3 |
| C. Ex. 5 | 20 | C | C | C | 450 | 200 | 69.5 |
| C. Ex. 6 | 21 | D | B | D | 390 | 105 | 47.6 (detached) |
| C. Ex. 7 | 22 | D | B | B | 880 | 505 | 29.6 (detached) |
| C. Ex. 8 | 23 | D | C | D | 790 | 425 | 57.5 |
| C. Ex. 9 | 24 | D | C | D | 500 | 215 | 51.5 |
| C.Ex.10 | 25 | D | B | B | 620 | 390 | 71.1 |
| C. Ex. 11 | 26 | B | C | D | 150 | 85 | 7.5 (detached) |
| C. Ex. 12 | 27 | B | C | C | 180 | 125 | 9.5 (detached) |
| C. Ex. 13 | 28 | B | C | C | 115 | 110 | 80.8 |
| C. Ex. 14 | 29 | B | C | D | 320 | 305 | 27.5 (detached) |

(continued)

| | Adhesive polarizing film | Evaluation | | | | | |
|---|---|---|---|---|---|---|---|
| | | Light leakage resistance | Durability (85°C) | Durability (65°C/95% RH) | Adhesive force to glass (g/25 mm) | probe Probe tack ($N/cm^2$) | Shear load (N) |
| C.Ex.15 | 30 | B | C | D | 205 | 160 | 31.6 (detached) |
| C. Ex. 16 | 31 | D | C | D | 725 (cohesive failure) | 685 | 3.1 |
| C. Ex. 17 | 32 | B | B | C | 355 | 300 | 90.6 |
| C. Ex.: Comparative Example | | | | | | | |

As is apparent from Table 2, all the adhesive polarizing films (adhesive polarizing films 1 to 15) produced by using the adhesive compositions of the present invention exhibited a certain degree of adhesive force (adhesive force to glass). In addition, from the results of the shear load test and the probe tack test, it was confirmed that both a high tensile strength and moderate flexibility could be exhibited. Furthermore, changes in appearance under the high-temperature condition (85°C) and the high-temperature and high-humidity condition (60°C/95% RH) were small, and light leakage under the high-temperature and high-humidity condition was also small. Thus, it was confirmed that excellent light leakage resistance and durability could be exhibited.

In contrast, from the results of the shear load test and the probe tack test, it was found that, in the adhesive polarizing films (adhesive polarizing films 16 to 22) prepared by using adhesive compositions that did not contain at least one of the components (B) and (C) (Comparative Examples 1 to 7), it was not possible to achieve a combination of a high tensile strength and moderate flexibility. Furthermore, it was confirmed that the adhesive polarizing films 1 to 15 could achieve a combination of excellent light leakage resistance and durability (under the high-temperature condition and the high-temperature and high-humidity condition), whereas the adhesive polarizing films 16 to 22 could not exhibit excellent light leakage resistance or durability (under the high-temperature condition and the high-temperature and high-humidity condition), or a satisfactory combination of light leakage resistance and durability could not be achieved even when one of these characteristics was excellent.

It was also confirmed that the adhesive polarizing films (adhesive polarizing films 23, 25, and 26) in the case where the amount of component (B) mixed was larger than the amount of component (C) mixed (Comparative Examples 8 and 10) and the case where the amount of component (B) or (C) mixed was larger than the range specified in the present invention (Comparative Examples 10 and 11) could not achieve a combination of a high tensile strength and moderate flexibility. It was also confirmed that, in the adhesive polarizing films 23, 25, and 26, a satisfactory combination of light leakage resistance and durability could not be achieved.

Focusing on the photopolymerization initiator, the adhesive polarizing films (adhesive polarizing films 24 and 31) in the case where a non-hydrogen abstraction-type photopolymerization initiator was used (Comparative Example 9) and the case where no hydrogen abstraction-type photopolymerization initiator was incorporated (Comparative Example 16) could not achieve a combination of a high tensile strength and moderate flexibility. Furthermore, the light leakage resistance and durability (under the high-temperature condition and the high-temperature and high-humidity condition) of these adhesive polarizing films were also inferior to those of the adhesive polarizing films 1 to 15. The adhesive polarizing film 27 in the case where the amount of hydrogen abstraction-type photopolymerization initiator was larger than the range specified in the present invention (Comparative Example 12) could not achieve a combination of a high tensile strength and moderate flexibility, though the adhesive polarizing film 27 exhibited satisfactory light leakage resistance. Furthermore, durability (under the high-temperature condition and the high-temperature and high-humidity condition) of adhesive polarizing film 27 was also inferior to that of the adhesive polarizing films 1 to 15.

Focusing on the isocyanate crosslinking agent, the adhesive polarizing film 28 in the case where the amount of isocyanate crosslinking agent mixed was larger than the range specified in the present invention (Comparative Example 13) could not achieve a combination of a high tensile strength and moderate flexibility, though the adhesive polarizing film exhibited good light leakage resistance. Furthermore, durability (under the high-temperature condition and the high-temperature and high-humidity condition) of the adhesive polarizing film 28 was inferior to that of the adhesive polarizing films 1 to 15. The adhesive polarizing film 32 in the case where no isocyanate crosslinking agent was incorporated (Comparative Example 17) could achieve a combination of a high tensile strength and moderate flexibility, and showed

good results regarding light leakage resistance and durability under the high-temperature condition. However, durability under the high-temperature and high-humidity condition of the adhesive polarizing film 32 was inferior to that of the adhesive polarizing films 1 to 15.

Focusing on the silane compound, the adhesive polarizing films (adhesive polarizing films 29 and 30) in the case where no silane compound was incorporated (Comparative Example 14) and the case where the amount of silane compound mixed was larger than 3 parts by weight (Comparative Example 15) could not achieve a combination of a high tensile strength and moderate flexibility, though the adhesive polarizing films exhibited good light leakage resistance. Furthermore, durability (under the high-temperature condition and the high-temperature and high-humidity condition) of these adhesive polarizing films was also inferior to that of the adhesive polarizing films 1 to 15.

Industrial Applicability

According to the present invention, it is possible to provide a radiation-curable adhesive composition for an optical component that can exhibit a high tensile strength and flexibility suitable for enabling stable adhesion between the optical component and an adherend when light-cured, and that can exhibit excellent durability even under high-temperature conditions and high-temperature and high-humidity conditions.

It is also possible to provide an adhesive optical component that can sufficiently prevent light leakage even under high-temperature conditions and high-temperature and high-humidity conditions and that can suppress occurrence of detachment, foaming, and the like and can suppress a change in appearance because the adhesive optical component includes the above adhesive composition.

## Claims

1. A radiation-curable adhesive composition for an optical component comprising:

100 parts by weight of a (meth)acrylic copolymer (A) composed of 80% to 99.8% by mass of an alkyl (meth) acrylate (a1), 0.1% to 10% by mass of a carboxyl-group-containing (meth)acrylic monomer (a2), and 0.1% to 10% by mass of a hydroxyl-group-containing (meth)acrylic monomer (a3) (where the total amount of (a1) to (a3) is 100% by mass), the (meth)acrylic copolymer (A) having a glass transition temperature of -20°C or lower and a weight-average molecular weight of 500,000 to 2,000,000;

0.01 to 10 parts by weight of a radiation-curable acrylic compound (B) represented by general formula (1) below:

[Chem. 1]

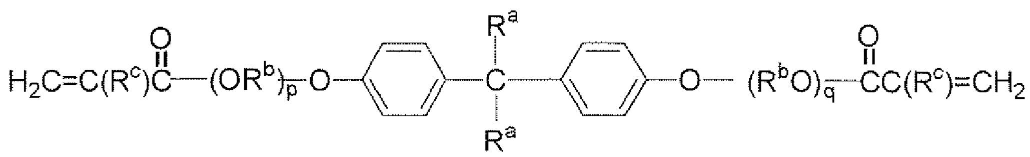

(1)

(where $R^a$ represents hydrogen or an alkyl group having 1 to 5 carbon atoms, $R^b$ represents an alkyl group having 2 to 4 carbon atoms, and $R^c$ represents hydrogen or a methyl group,

p and q each represent an integer, and the sum of p and q is 4 to 12);

1 to 30 parts by weight of a radiation-curable acrylic compound (C) represented by general formula (2) or (3) below:

[Chem. 2]

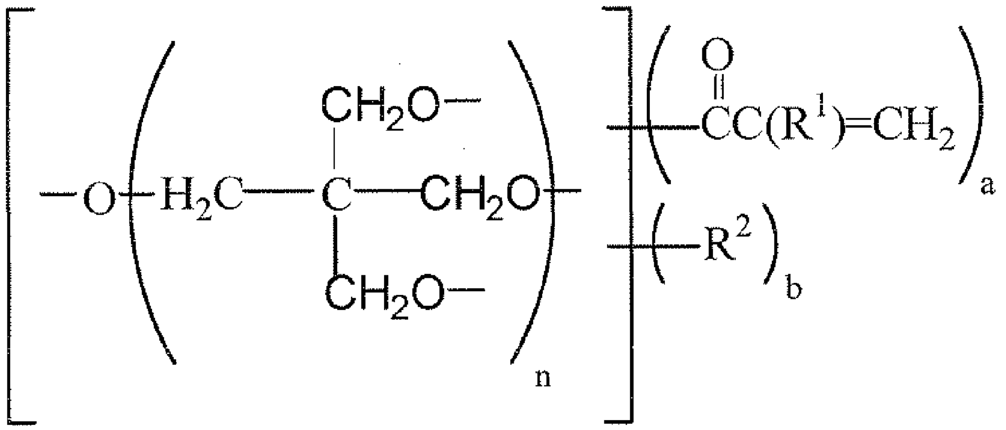

(2)

(where n is an integer of 1 to 5, a and b each represent an integer, a represents an integer of 3 to 10, and the relationship a + b = 2n + 2 is satisfied,
$R^1$ represents hydrogen or a methyl group,
$R^2$ represents a hydrogen atom, a hydrocarbon group which may have a substituent, an oxygen-containing functional group which may have a substituent, or a nitrogen-containing functional group which may have a substituent)

[Chem. 3]

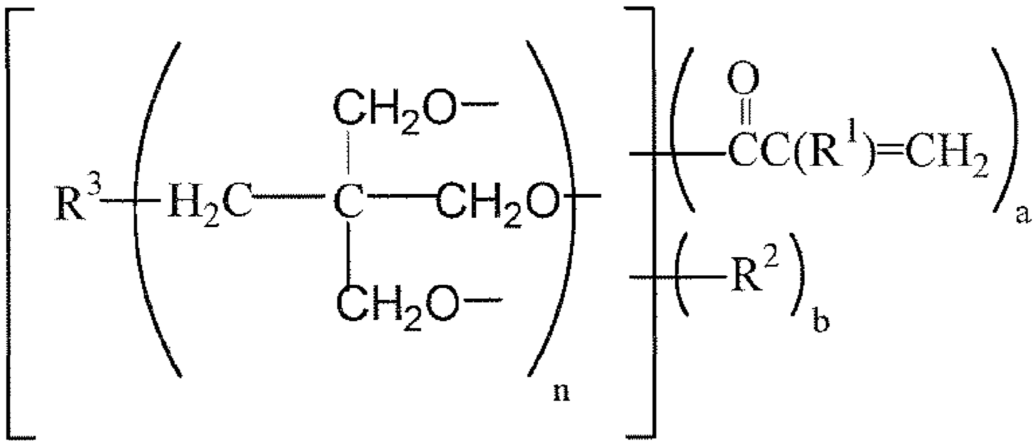

(3)

(where n is an integer of 1 to 5,
a and b each represent an integer, a represents an integer of 3 to 10, and the relationship a + b = 2n + 1 is satisfied,
$R^1$ represents hydrogen or a methyl group,
$R^2$ and $R^3$ each independently represent a hydrogen atom, a hydrocarbon group which may have a substituent, an oxygen-containing functional group which may have a substituent, or a nitrogen-containing functional group which may have a substituent);
0.1 to 10 parts by weight of a hydrogen abstraction-type photopolymerization initiator (D);

0.01 to 10 parts by weight of an isocyanate crosslinking agent (E) having two or more isocyanate groups in its molecule; and

0.01 to 3 parts by weight of a silane compound (F) having an organic functional group having reactivity with a carboxyl group,

wherein the total amount of the amount of radiation-curable acrylic compound (B) mixed and the amount of radiation-curable acrylic compound (C) mixed is 3 to 40 parts by weight, and the amount of radiation-curable acrylic compound (C) mixed is larger than the amount of radiation-curable acrylic compound (B) mixed.

**2.** The radiation-curable adhesive composition for an optical component according to Claim 1, wherein the radiation-curable acrylic compound (B) is at least one selected from the group consisting of bisphenol A polyethylene glycol diacrylate, α-phenyl-ω-acryloyloxypolyoxyethylene-formaldehyde polycondensate, bisphenol A polypropylene glycol diacrylate, and bisphenol A diglycidyl ether-acrylic acid adduct.

**3.** The radiation-curable adhesive composition for an optical component according to Claim 1, wherein the radiation-curable acrylic compound (C) is at least one selected from the group consisting of pentaerythritol triacrylate tolylene diisocyanate urethane polymer, dipentaerythritol hexaacrylate, pentaerythritol tetraacrylate, pentaerythritol triacrylate, and ditrimethylolpropane tetraacrylate.

**4.** An adhesive optical component comprising an optical component and an adhesive layer provided on one surface or both surfaces of the optical component, the adhesive layer being composed of the adhesive composition according to any one of Claims 1 to 3.

**5.** The adhesive optical component according to Claim 4, wherein the optical component is an optical film selected from the group consisting of a polarizing film, a retardation film, an elliptically polarizing film, an antireflection film, a luminance-improving film, a light diffusion film, and an optical compensation film.

**INTERNATIONAL SEARCH REPORT**

International application No.
PCT/JP2010/051982

A. CLASSIFICATION OF SUBJECT MATTER
*C09J175/04*(2006.01)i, *C09J4/02*(2006.01)i, *C09J7/02*(2006.01)i, *C09J11/06*(2006.01)i, *C09J133/02*(2006.01)i, *C09J133/04*(2006.01)i, *G02B5/30*(2006.01)i, *G02F1/1335*(2006.01)i

According to International Patent Classification (IPC) or to both national classification and IPC

B. FIELDS SEARCHED

Minimum documentation searched (classification system followed by classification symbols)
C09J175/04, C09J4/02, C09J7/02, C09J11/06, C09J133/02, C09J133/04, G02B5/30, G02F1/1335

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 9-236916 A (Mitsubishi Rayon Co., Ltd.), 09 September 1997 (09.09.1997), the entire specification (Family: none) | 1-5 |
| A | JP 7-56334 A (Hitachi Chemical Co., Ltd.), 03 March 1995 (03.03.1995), the entire specification (Family: none) | 1-5 |
| A | JP 2006-225443 A (Nippon Kako Toryo Co., Ltd.), 31 August 2006 (31.08.2006), the entire specification (Family: none) | 1-5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 May, 2010 (06.05.10) | 18 May, 2010 (18.05.10) |
| Name and mailing address of the ISA/ Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006316203 A
- JP 2003034781 A